# EUROPEAN PATENT SPECIFICATION

(11) **EP 1 906 305 B1**
(45) Date of publication and mention of the grant of the patent: **06.03.2013**
(21) Application number: 07113046.2
(22) Date of filing: 24.07.2007
(51) Int. Cl.: G06F 9/54, G06F 9/44

(54) **Method and system for data preparation and communication between software applications**
Verfahren und System zur Datenvorbereitung und -kommunikation zwischen Software- Anwendungen
Méthode et système pour préparer et envoyer des données entre des applications logicielles

(30) Priority: 28.09.2006 US 848532 P; 29.11.2006 US 606441
(43) Date of publication of application: 02.04.2008
(73) Proprietor: SAP AG, 69190 Walldorf (DE)
(72) Inventor: Bohle, Holger, 69234 Dielheim (DE); Boeckenhauer, Jens, 69168 Wiesloch (DE)
(74) Representative: Richardt Patentanwälte GbR

(56) References cited:
- WO-A1-2004/012104
- US-A1- 2006 085 799

## Description

### Technical field

The invention relates to a computer implemented method of providing a first graphical interface of a first application for a second application, as well as a computer program product.

### Background and related art

Services provided by a computing system may include any type of functionality provided by the system and may be implemented at least in part by software applications of the system. For example, a particular service may include a business functionality and be implemented by an application which includes business logic to perform the business functionality. Generally speaking, legacy applications exist which have become outdated with respect to the graphical user interface, but which may implement services which are still useful. For example, the user Interface of a legacy application may have become outdated, but the service it implements may still be useful. One approach to using the services of legacy applications includes developing a new application which reuses the services of the legacy application but which updates the graphical user interface. - -

One problem associated with this approach is that there may be difficulties in communicating between the new application and the legacy application. For example, the new application and the legacy application may be executed by the computing system according to different contexts such as, for example, a specific relative time and duration of execution. Thus, data which is dependent on a context or state of the new or legacy application may be incorrectly communicated between the new and legacy applications.

US 2006/085799 is directed to systems and methods which provide an interface for disparate software applications using a decentralized adapter architecture. Embodiments of the invention provide an interface between software applications using multiple software modules (referred to as adapters). Preferably at least one adapter is associated with each end of a software application Information communication link.

### Summary of the invention

The present invention provides a computer implemented method of providing a first graphical interface of a first application for a second application, wherein the second application comprises the second graphical user interface presentable on a display of the second application for a user's navigation through a number of display outputs of the second application. The second application further comprises a second interface, the second interface comprising a batch input functionality, wherein said second interface is adapted to receive a stack of action scripts specifying said navigation through a number of display outputs, wherein the second application executes the stack of action scripts, wherein the execution of the stack is performed by batch processing. The first application comprises a first interface, wherein the first interface is adapted for communication with the second interface. The first application further comprises the first graphical user interface presentable on a display of the first application, wherein the display outputs of the second application are mapped to the display outputs of the first application by mapping means.

The computer implemented method further comprises the following steps: one step is receiving a navigation input at a first application, the navigation input specifying a user's navigation from a current display output of the first application to a next display output of the first application, wherein the current display output is mapped from the display output of the second application to the display output of the first application by the mapping means.

In a further step, an action script is added to an ordered stack of action scripts maintained by an execution controller, wherein the added action script corresponds to the navigation input, wherein the added action script is added last in the order of the ordered stack, wherein the added action script is unpopulated by data input. The old stack of action scripts is provided to the second interface by the execution controller. The ordered stack of action scripts is then executed by the second application according to the order given by the ordered stack of action scripts. A display output is mapped of the second application resulting from the execution of the ordered stack to the next display output of the first application by the mapping means. A data input is received at the first graphical user interface and the data input is received with respect to said next display output. The added action scripts populated with the data input and the ordered stack of action scripts comprising the populated action script is provided to the second interface by the execution controller.

The executed ordered stack of action scripts comprising the populated action script is then executed by the second application according to the order given by the ordered stack of action scripts. A display output is mapped of the second application resulting from the execution of the ordered stack comprising the populated action scripts to a next consecutive display output of the first application by the mapping means. Finally, the previously mentioned steps are repeated until a stop command is received at the first graphical user interface of the first application.

The computer implemented method according to the invention has the advantage, that the first graphical user interface of the first application can be used to redirect display outputs originally designated for the second graphical user interface of the second application to the first graphical user interface of the first application. This allows for example for an improved presentation of data originally designated for the second graphical user interface while maintaining the original software being executed with the second application. The second application can therewith be indirectly upgraded with a new graphical user interface and a need for reprogramming of the software of the second application for the only purpose for improving the output of the second graphical user interface can be omitted.

In order to highlight this advantage more technically, the communication between the first and second application is handled by an intermediate generic execution layer which is called the execution controller. The first graphical user interface directly calls the execution controller and passes data on the controller. Then, the controller invokes the second application by means of a call which is synchronously processed in background mode. As a parameter, this call passes a sequence of screen declarations, field values and navigation commands. According to the sequence, the screen outputs of the second application are processed in the background with the integrated functional logic of the second application. The call of the second application is able to return messages and therefore, the controller picks up the screen values generated by the second application and this way, the field values generated by the second application can be transferred to the first application.

The reason for using an ordered stack of action scripts instead of directly processing commands received at a first application at the second application and returning respective final results in terms of screen outputs is, that at each action like a navigation input or data input, the data are freshly received from the second application. The current action stack corresponds to a state hold in the second application even though the communication itself may be stateless. In this way, the first application and the second application stay always synchronized, i.e. the first application cannot miss any changes like implicit correction of values occurring in the second application. The first application can display the current second application data no matter how complex the first application navigation may be.

Furthermore, error handling can be processed at each call of the second application, i.e. first application and second application are closely connected. As a consequence, it is possible to completely avoid any application logic in the first application, which allows for a simplified and therewith cheaper programming and design of the first application, in particular of its graphical user interface. The close connection of first and second application therewith considerably reduces costs for the creation of new graphical user interfaces since the first application can be kept fairly simple.

It has to be mentioned, that here the term 'stateless' has to be understood in the context, that the second application is only called by the execution controller to execute the actual ordered stack of action scripts, wherein after execution of the stack of action scripts the second application can return for example to idle mode without keeping any information about the last execution session of the stack of action scripts. This has the advantage, that the second application is able to support multi-user queues: even though the second application may have been originally designed to support only one user by its second graphical user interface, due to the usage of stacks of action scripts and stateless execution, multiple users can provide various different stacks to the second interface of the second application which comprises the batch input functionality. The second application can then process the various stacks of the multiple users subsequently in a queue and return respective execution results to the execution controller. Therewith, a single user environment of the second application is transformed into a multi-user system.

Action scripts are generally blocks of the second application navigation sequence not containing any user input (field values). Action scripts are defined such that they start with a navigation command of the source screen and end with the screen declaration of the target screen of the navigation at second application. If source and target match, action scripts can be concatenated to the complete navigation sequence of the second application of a well defined second application call. Upon execution, the execution controller can enrich a script with user input, which is called 'populating of the action script'.

After successful execution of an action, the first application navigates to the target state displaying the data received from the call of the second application. In order to get all the fields of the target state, the action script must contain all the screens generated by the second application assigned to the target state.

In accordance with an embodiment of the invention, in case it is not possible to populate the added action script with data input, the steps previous of receiving a data input are again performed. Such a situation may occur, if for example after execution of the ordered stacks of action scripts the display output of the second application mapped to the next display output of the first application does not comprise any possibility to input data, which may for example occur if said next display output of the first application only displays various possibilities a user can use to navigate to different next user input screens. In this case, it is of course not possible to populate the added action script with any data input, since it is not possible for a user to provide any data input at the present state of display output of the first application.

In accordance with an embodiment of the invention, the display output of the first application comprises elements comprised in a plurality of display outputs of the second application. Also, executing of the added action script comprises navigating from a display output of the second application through all of the plurality of display outputs of the second application. In order to clarify this embodiment, an example may be that the second application provides a display output of a lengthy table, wherein displaying of that lengthy table extends over multiple screen pages of display outputs of the second application. According to the present invention it is now possible, to merge such multiple display pages to one new reordered or redesigned display page which can be displayed on the first graphical user interface of the first application. It is also possible, to extract various elements from these multiple display outputs of the second application and display only a selected extraction comprising elements comprised in the plurality of display outputs of the second application. However, in order to enable the first application to display a merged or extracted part of the plurality of display outputs of the second application, it is necessary that the action script is adapted in such a way that the second application navigates automatically through all of the plurality of display outputs of the second application, in order to generate a comprehensive amount of display outputs at a second application, which can then be used in order to display elements comprised in the plurality of display outputs of the second application at the first application.

In accordance with an embodiment of the invention, the method further comprises launching the second application only at the beginning of the executing of the ordered stack of action scripts and terminating the second application upon completion of the executing of the ordered set of action scripts. As already mentioned above, this stateless execution of the second application has various advantages like support of a multi-user environment, ensured synchronization of the first and second application and this also allows for a fairly simply design of the first application.

In accordance with an embodiment of the invention, the batch input functionality of the second application is adapted to process batches of commands without requiring real time access by a user for each command and wherein the execution controller is capable of communicating with both the first application and the second application via the first and the second interfaces. Since no real time access by a user for each command is required a multi-user environment can be supported using the second application.

In accordance with an embodiment of the invention, the populating of action scripts with data input is triggered by receiving the data input at the first application or by receiving a further navigation input at the first application. The difference between these two alternatives is that a data input may for example be a simple choice of an option by the user, wherein immediately after selecting of the option by the user the populating of the action script is performed. The other possibility of receiving a further navigation input at the first application requires that for example multiple data input fields are present at the first graphical user interface of the first application. The user fills in data in said input fields and afterwards presses a respective navigation button at the first application. Pressing the navigation button then triggers the population of the added action script with the data input in said input fields.

It has to be noted, that even though in the present patent application triggering the populating is distinguished between receiving the data input at a first application or receiving a further navigation input at a first application as explained above, both cases can also be considered to be summarized as 'receiving a navigation input at a first application'.

In accordance with an embodiment of the invention, the method further comprises removing the added action script from the ordered stack of action scripts in case the ordered set of action scripts is incompletely executed at a second application, wherein the added action script is populated or unpopulated. This has the advantage, that the batch processing functionality using the ordered stack of action scripts without the added action script is maintained fully functioning. Keeping the erroneous added action script in the ordered stack of action scripts would prevent the second application from clean execution of the complete ordered stack of action scripts which however might be a necessary precondition for further navigation and data input steps.

In accordance with an embodiment of the invention, in case an incomplete execution of the ordered stack occurs the incomplete executing of the ordered stack of action scripts is signaled by the second application by means of a message being generated by the second application. Thereby, such a signal message may require a responsive input for the execution to continue. The signal message may be an error message or just an information message.

This allows for a wide range of possibilities to flexibly handle the occurrence of errors during execution of the ordered stack of action scripts. One possibility is if the error has for example only minor effects on a subsequent execution of further action scripts in the stack of action scripts, a user may choose to ignore the error message and the second application would in this case still be able to continue to process later on additionally added scripts of the respective ordered stack of action scripts. A practical example may be that the second application may detect the input of a wrong article number, wrong date, or other wrong database inputs, which will not prevent the second application from continued execution of the ordered stack of action scripts but will rather lead to some inconvenience of the user due to its slight error.

In accordance with an embodiment of the invention, the display output of the second application comprises contents of a second data container, wherein the contents of the second data container are only partially available at the display output of the second application. In this case, the method further comprises inserting a predetermined number of browsing commands into the added action script by the controller, the browsing commands being adapted to retrieve contents of the second data container currently not available to said display output of the second application. The method further comprises evaluating if each of the predetermined number of browsing commands returned new contents of the second container and if each of the predetermined number of browsing commands returned new contents of the second data container, inserting additional browsing commands into the added action script by the controller, re-executing the entire ordered stack of action scripts at a second application and repeating the previous steps until the returned contents of the second data container correspond to contents of the data container previously returned by any of the browsing commands. Then the method further comprises determining a minimum number of browsing commands required until the returned contents of the second data container corresponds to contents of the data container previously returned by any of the browsing commands and storing, by the controller, said minimum number of browsing commands.

For example, such a data container might be a large database which cannot be retrieved by the second application using only one display output. By way of example, the display output of the second application may require 50 pages of screen output in order to display the complete content of respective database. In this case, instead of just receiving only the first display page of the database a predetermined number like for example 30 browsing commands can be automatically inserted into the added action script by the controller and these 30 browsing commands will then be used to retrieve page by page the contents of said 50 page long database. In the present example, even after the 30^{th} browsing command returned new contents of the database, additional browsing commands are inserted into the added action script and the entire ordered stack of action scripts is repeated at a second application until the returned contents of the database corresponds to the contents of the database previously returned by any of the browsing commands. In the present example, this is the case after 50 browsing commands. The minimum number of browsing commands required until the return contents of the database correspond to contents of the database previously returned by any of the browsing commands is determined and the number of browsing commands is stored by the controller.

This has the advantage, to keep the size of the presentation of such a container (for example database) independent of the screen properties of the second application. It also allows avoiding additional calls at the second application for continuous scrolling or browsing in the first application. The execution controller fetches the entire content of the data container at once. In order to optimize the performance behavior, the browsing scripts are inserted only once into the top action and only if the data container is part of the top action target state.

One problem is that a number of necessary browsing steps depends on run time data. This is the reason that the second application is initially called with a default number of browsing steps. The data container must have a defined unique key for its elements. In terms of the key, the execution controller evaluates whether individual browsing steps provide new rows. If even the last browsing step provides new content, the second application is called again with a larger number of scrolling steps. The controller counts the number of browsing steps until the data content is completely received. In order to optimize the performance behavior as already mentioned above, the number is cached and used at the next occurrence of the same data container.

In accordance with an embodiment of the invention, the navigation input comprises accessing a particular portion of the first data container comprised on the display output of the first application, the first data container comprising elements of the second data container. In this case, the method further comprises inserting a positioning command into the added action script by the controller, the positioning command being adapted to directly address a portion of the second data container. The method also comprises inserting a positioning command into the added action script by the controller, the positioning command being adapted to topmost position a portion of the second data container relating to the particular portion of the first data container on the display output of the second application.

This allows to directly and uniquely access arbitrary elements in the data container of the second application. In terms of the second application navigation sequence, the positioning functionality translates to a positioning script. If individual elements are addressed from the first application (value changes or element selection), it is convenient if the controller uses the positioning script to access the elements instead of browsing the data container step by step. This has the advantage that if data content is large, performance is saved as a short positioning script usually consists of less navigation steps than a long browsing step sequence. However, this of course requires that the second application data container possesses a functionality to directly and uniquely access arbitrary elements.

Inserting a positioning command into the added action script by the controller wherein the positioning command is adapted to topmost position a portion of the second data container relating to the particular portion of the first data container on the display output of the second application has the advantage, that on the one hand side the respective portion can be directly retrieved by the first application and on the other hand that subsequent elements of the second data container positioned after the respective portion of the second data container are immediately available for display by the first application.

In accordance with an embodiment of the invention, the stop command received at a first application comprises an abort command or an apply command or an exit command. Thereby, the abort command comprises storing the ordered stack of action scripts to a memory. The apply command comprises storing information relating to the execution of the ordered stack of action scripts in a database. The exit command comprises terminating of the first application.

The abort command allows storing the ordered stack of action scripts in a memory, which can also be described as saving a draft of the ordered stack of action scripts for later reuse. Of course, this requires a possibility to reload such a stored ordered stack of action scripts from the memory for later reuse. The apply command in contrast leads to a re-execution of the complete ordered stack of action scripts by the second application and final storage of the information relating to the execution of the ordered stack of action scripts in respective databases. In the third alternative, the exit command terminates the first application completely, preferably with displaying a user the possibility to store the up to now generated ordered stack of action scripts to a memory.

In accordance with an embodiment of the invention, the method further comprises receiving an undo command from the first application, wherein upon receiving said undo command the added action script in the ordered stack of action scripts is removed from the ordered stack of action scripts or wherein upon receiving said undo command the populated added first action script is unpopulated. This is another great advantage of using a stack of action scripts instead of directly executing navigation commands and applying navigation commands and data inputs to a database by the second application: since the second application only executes stacks of scripts, it is easily possible to remove the topmost action script or selectively any action script in the ordered stack of action scripts which allows to revoke a previous navigation commands or data inputs.

In accordance with an embodiment of the invention, the method further comprises maintaining multiple ordered stacks of action scripts associated with multiple first applications, wherein the multiple ordered stacks of action scripts are provided to the second application and executed by the second application consecutively. As already mentioned above, this allows using a second application originally designed for a single user environment for usage in a multi-user environment, each of the multiple users thereby corresponding to one of the multiple first applications.

In another aspect, the invention relates to a computer program product comprising computer executable instructions adapted to perform any of the method steps of the method of providing a first graphical user interface of a first application for a second application.

### BRIEF DESCRIPTION OF THE DRAWINGS

So that features of the present invention can be understood in detail, a description of the invention can be had by reference to embodiments, some of which are illustrated in the appended drawings. It is to be noted, however, that the appended drawings illustrate only particular embodiments of the invention and are therefore not to be considered limiting of its scope, for the invention may admit to other equally effective embodiments.
FIG. 1 is a schematic diagram depicting one embodiment of a software architecture.
FIG. 2 is a schematic diagram depicting one embodiment of a computing environment.
FIG. 3 is a flow chart depicting a schematic representation of one embodiment of a method.
FIG. 4 is a schematic diagram depicting one embodiment of a graphical user interface of a first application.
FIG. 5 is a schematic diagram depicting another representation of one embodiment of the method depicted in FIG. 3.
FIG. 6 is a flow chart depicting a schematic representation of one embodiment of another method.
FIGS. 7A-G are schematic diagrams depicting another representation of one embodiment of the method depicted in FIG. 6.
FIGS. 8A-G are schematic diagrams depicting yet another representation of one embodiment of the method depicted in FIG. 6.
FIG. 9 is a schematic diagram depicting one embodiment of a correspondence between states of the first application and states of a second application.
FIG. 10 is a schematic diagram depicting one embodiment of a partially-visible data container.
FIG. 11 is a schematic diagram depicting one embodiment of a correspondence between browsing scripts and positioning scripts.
FIG. 12 shows an embodiment of a software architecture comprising a first application and a second application.
FIG. 13 shows a computer implemented method of providing a first graphical user interface of a first application for a second application.
FIG. 14 an exemplary interaction a user would perform with a new user interface which accesses the transactional logic of an older integrated application by communicating through the mappings of an execution controller.

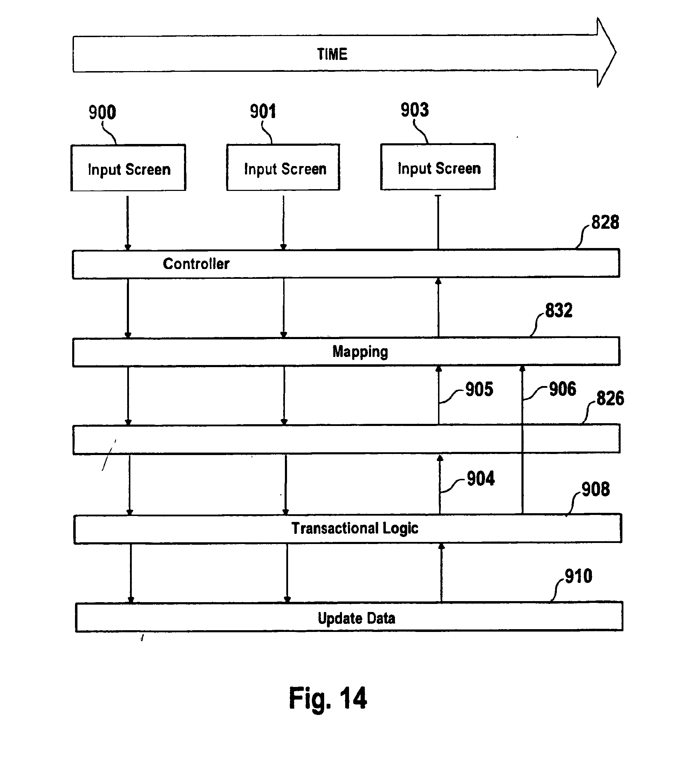

FIG. 14 an exemplary interaction a user would perform with a new user interface which accesses the transactional logic of an older integrated application by communicating through the mappings of an execution controller.

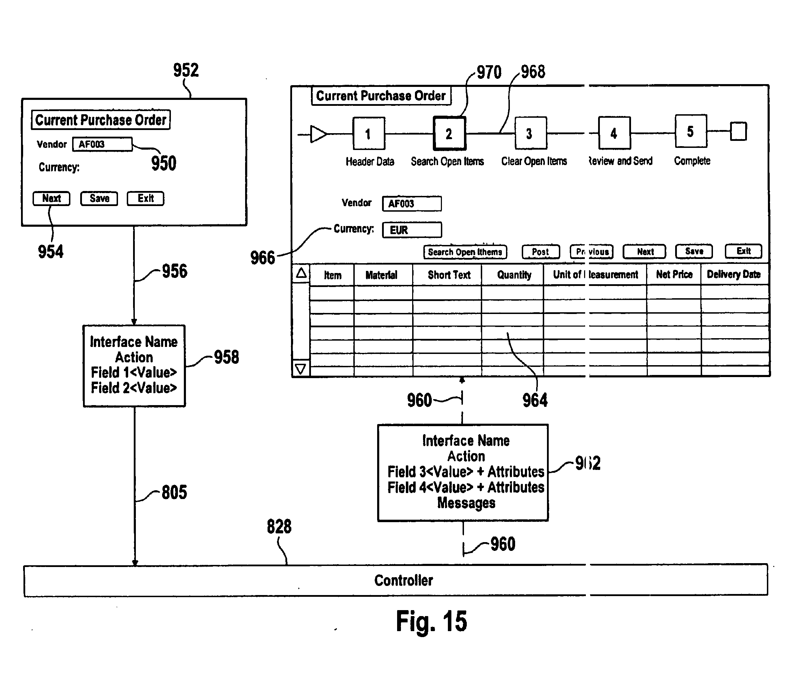

FIG. 15 depicts an example where a controller, in this case the controller communicates with a backend integrated application to return a new user interface.

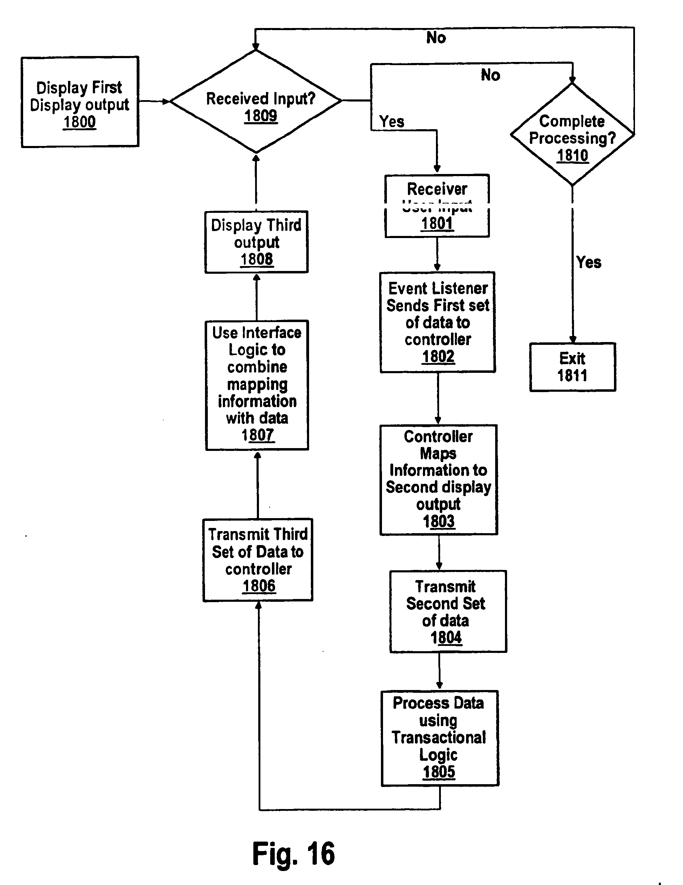

FIG. 16 depicts the example logic that may be performed in order to map and transmit information between a first display output to the second display output of an integrated application in order to create a third display output for interaction with a user.

### DETAILED DESCRIPTION

In the following, for the sake of simplicity, the output of graphical user interfaces presentable on a display of an application is substituted by the term 'state of an application'.

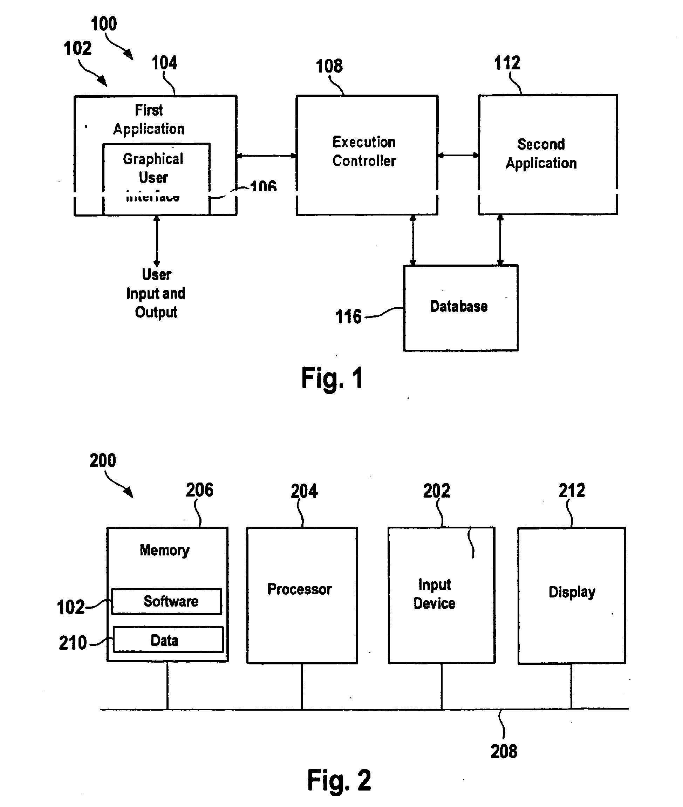

Embodiments are related to data preparation and communication between software applications. FIG. 1 depicts one embodiment of a software architecture 100. The depicted exemplary embodiment of the software architecture 100 comprises a plurality of software components 102, including a first application 104, an execution controller 108, and a second application 112. The first application 104 is capable of receiving input from a user, and communicating with the execution controller 108. The execution controller 108 is capable of communicating with both the first application 104 and the second application 112. The second application 104 is capable of performing a service. In one embodiment, the software architecture 100 includes a database 116, and the performing of the service by the second application 112 includes accessing the database 116. In one embodiment, the execution controller 108 is capable of accessing the database 116. Other embodiments of the software architecture 100 also exist.

In an exemplary scenario, the first application 104 is a relatively newer application and the second application 112 is a relatively older application, e.g., a legacy application. For example, the first application 104 can be developed to update some undesirable or outmoded aspect of the second application 112. In one embodiment, the first application 104 comprises a graphical user interface 106 that is updated user interface relative to a user interface (not shown) of the second application 112.

The software architecture 100 runs in, and is part of, a computing environment 200, an exemplary embodiment of which is depicted in FIG. 2. The computing environment 200 comprises an input device 202, a processor 204, a memory 206, a communication line 208 and a display 212. The memory 206 further comprises data 210 and the various software components 102, which are stored in the memory 206 at least at some moment in time. The input device 202 optionally comprises at least one of: a keyboard, a mouse, a voice activated controller, an optical controller, an infrared controller, or other suitable input device. The memory 206 optionally comprises at least one of: a random access memory, a disk storage memory, or other suitable memory. The display 212 optionally comprises at least one of: a monitor, a television, a video projector, or other suitable display device. The software components 102 comprise computer program instructions which may be accessed and executed by the processor 204. The software components 102 are implemented in any suitable software language such as, for example, Java, ABAP, C, C++, etc. The data 210 optionally comprises data which is accessible by or integral to the database 116.

The memory 206, processor 204 and input device 202 are connected together and communicate with each other by means of the communication line 208. In one embodiment, the communication line 208 comprises a system bus, and the computing environment 200 comprises a single computer. In another embodiment, the communication line 208 comprises a network element, and the computing environment 200 comprises a distributed computing environment. In one embodiment in which the computing environment 200 is distributed, the memory 206, processor 204 and input device 202 are optionally distributed across different locations. In one embodiment in which the computing environment 200 is distributed, the computing environment 200 optionally comprises a plurality of some or all of the memory 206, the processor 204 and the input device 202. Other configurations of the computing environment 200 are also possible.

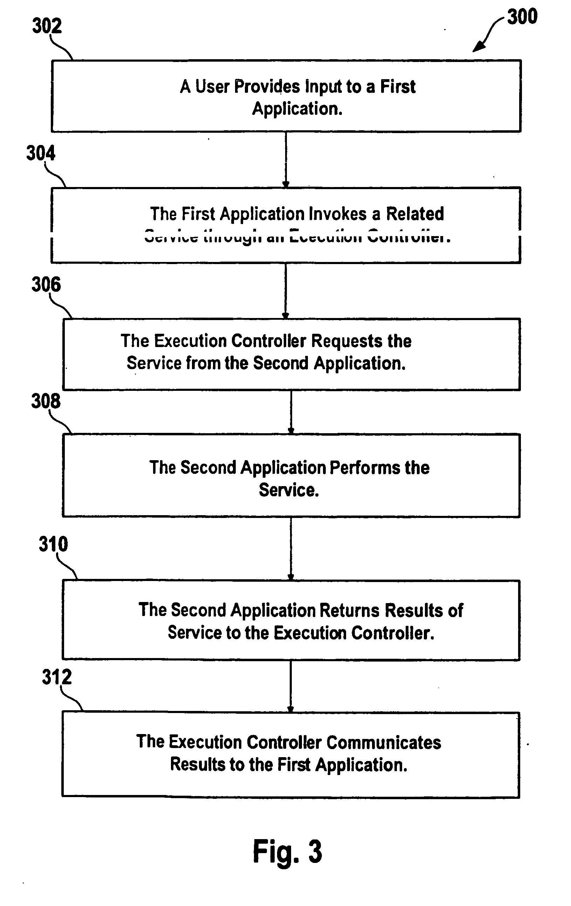

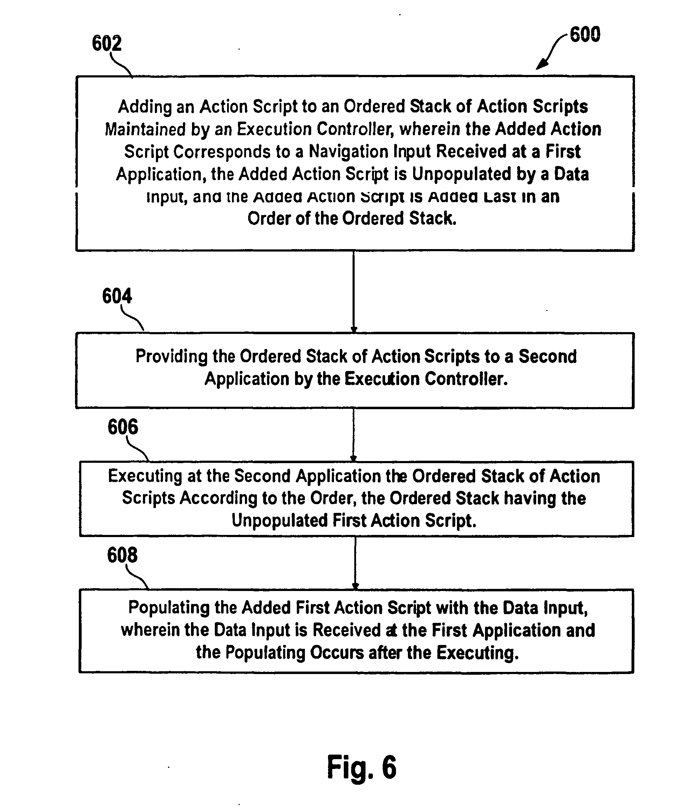

The software components comprise computer program instructions, which when executed by the processor 304, enable the performance of a method 300 (shown in FIG. 3) of using the software architecture 100 and a method 600 (shown in FIG. 6) of preparing data for communication between the first and second applications 104, 112 and communicating between the first and second applications 104, 112. In one embodiment, a computer-readable medium comprises the computer program instructions which enable the performance of the methods 300, 600. In one embodiment, a system comprises means to perform each of the steps of the methods 300, 600. For example, in one embodiment, the means to perform each of the steps of the methods 300, 600 comprise elements of the computing environment 200.

FIG. 3 is a flow chart depicting a schematic representation of one embodiment of the method 300 of using the software architecture 100. According to the illustrated embodiment, at step 302 the user provides an input to the first application 104. The input to the first application 104 typically comprises an input to the graphical user interface 106 of the first application 104. At step 304 the first application 104 then invokes a service through the execution controller 108, the service being related to the received user input. At step 306 the execution controller 108 then requests the invoked service from the second application 112. At step 308 the second application 112 then performs the requested service. At step 310 the second application 112 returns a result of the service, optionally including any output data, to the execution controller 108. At step 312 the execution controller 108 then communicates with the first application 104 regarding the result, optionally including communicating the output data.

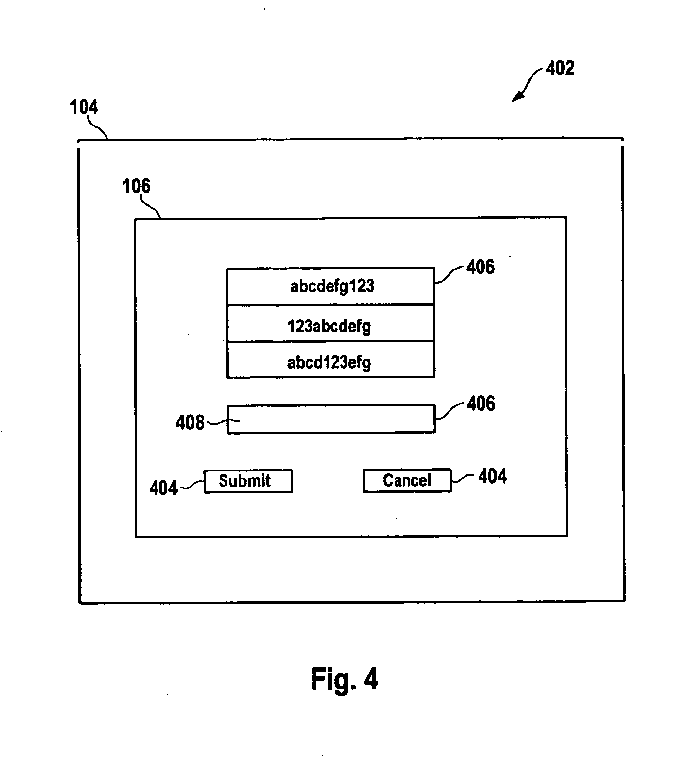

The performance of the method 300 typically results in a change of state 402 (shown in FIG. 4) of the first application 104. The state 402 of the software component 102, e.g. the first or second applications 104, 112, is the operational status of the component 102 at a particular moment in time. The state 402 of the component 102 includes the status of both the user interface and other elements of the component 102 not directly presented to the user. In one embodiment in which the first application 104 comprises the graphical user interface 106, a particular state 402 of the first application 104 comprises the particular visual configuration of the graphical user interface 106 presented to the user. For example, the graphical user interface 106 comprises elements which are visible to the user, and a state 402 of the first application 104 thus comprises a specific configuration of the visible elements of the graphical user interface 106.

In one embodiment, the graphical user interface 106 of the first application 104 comprises graphical elements including at least one of: at least one button 404 (shown in FIG. 4), or at least one data display 406 (shown in FIG. 4). In such an embodiment, the state 402 of the first application 104 comprises a specific visual configuration of any buttons and data displays of the graphical user interface 106. FIG. 4 depicts one embodiment of the first application 104 having the graphical user interface 106 having the at least one button 404 and the at least one data display 406.

The at least one button 404, as referred to herein, refers to any element of the graphical user interface 106 which can accept an input from the user to trigger an action. The at least one button 404 may graphically resemble an actual button, but may also appear as other types of controls or visual elements, such as, e.g., switches, selectors, radio buttons, pull-down boxes, menus, menu items, etc. The action, as referred to herein, and also as referred to as a navigation action or a navigation, triggered by the at least one button 404 navigates the first application 104 between states 402. For example, a specific action, i.e., a specific navigation, triggered by a specific button 404 may navigate the first application 104 between a first state 402a of the first application 104 and a second state 402b of the first application 104. The first and second states 402a,b can be different states 402 or the same states 402. Different states 402 may appear visually different to the user, or may appear visually the same or similar to the user. Two states 402 which are the same appear visually the same to the user. A navigation between the first and second states 402a,b which are the same states 402 is also referred to as a trivial navigation.

The at least one data display 406, as referred to herein, refers to any element which displays data to the user as part of a service being performed. In one embodiment, the data displayed to the user by the at least one data display 406 comprises data retrieved from the database 116. For example, in one embodiment, the data display 406 comprises a database table. The at least one data display 406 can also optionally accept input from the user. For example, in one embodiment, the at least one data display 406 comprises a data input field 408 which is capable of accepting data input from a user. The data input optionally comprises at least one of: numerical data, textual data, or a data file. Input to the at least one data display 406 can provide new data to the first application 104 and change existing data being displayed by the first application 104.

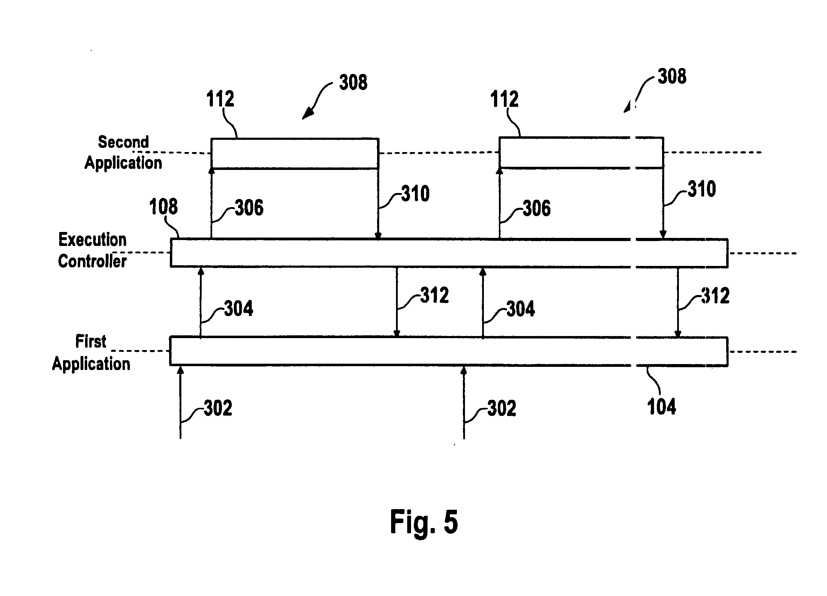

FIG. 5 is flow diagram depicting another schematic representation of one embodiment of the method 300. The depiction of FIG. 5 illustrates the method 300 by graphically relating each step of the method 300 according to which software component 102 the step involves. FIG. 5 also shows additional aspects of the method 300 by which, in one embodiment, the first application 104 is executed in a stateful manner and the second application is executed in a stateless manner. For example, in one embodiment, the first application 104 individually invokes 304, through the execution controller 108, a plurality of services from the second application 112 over a period of time. As depicted in FIG. 5, the first application 104 executes in a stateful manner because it is kept running throughout the process of invoking 304 the plurality of services, and as such has a corresponding state 402 at each moment in time. By contrast, the second application 112 executes in a stateless manner wherein the second application 112 is launched at the beginning of each service request 306, performs 308 the service, and then is terminated upon completing each requested service. The second application 112 is not kept running between successive service requests 306, it is instead terminated upon completion of each request 306 and before responding to another request 306. Thus, the second application 112 is executed in a stateless manner because the second application 112 is not kept running, and therefore has no state, between the end of the performance 308 of one service and a subsequent service request 306.

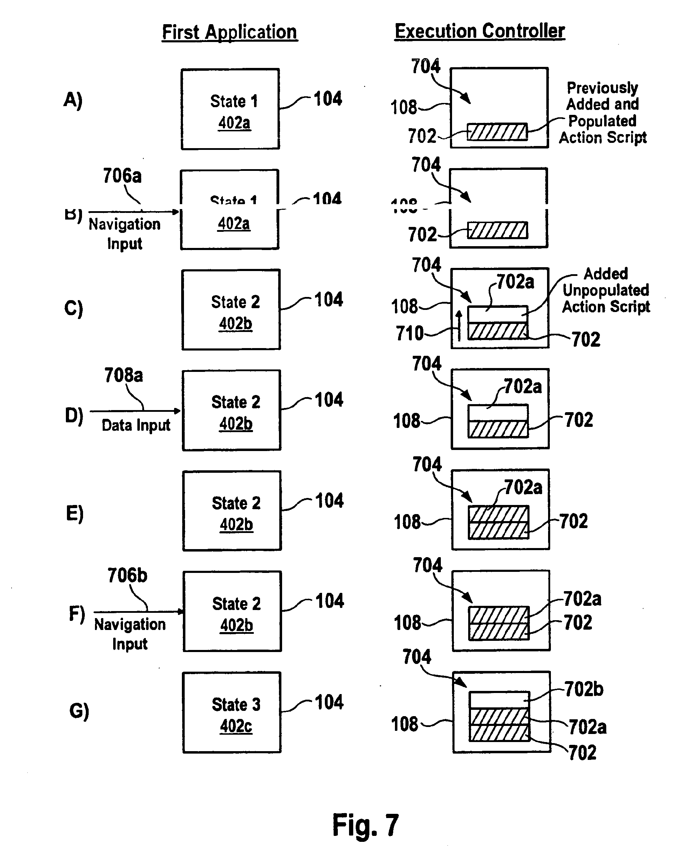

In one embodiment, a method 600 of preparing data for communication between the first and second applications 104, 112, and of communicating between the first and second applications 104, 112, is provided. FIG. 6 is a flow chart depicting a schematic representation of one embodiment of the method 600. FIGS. 7A-G are schematic diagrams which also depict some aspects of an exemplary performance of one embodiment of the method 600 in further detail. In one embodiment, the method 600 prepares data, and communicates, to enable the first application 104 to execute in a stateful manner and the second application 112 to execute in a stateless manner.

In the depicted embodiment, the method 600 begins at step 602. At step 602, a first action script 702a is added to an ordered stack 704 of action scripts 702 which is maintained by the execution controller 108. Each action script 702 of the ordered stack 704 of action scripts 702 comprises at least one command for execution at the second application 112. The at least one command of each action script 702 corresponds to a navigation input 706 received at the first application 104. Inputs received at the first application 104 include navigation inputs 706 and data inputs 708. As discussed above, navigation inputs 706 change the state 402 of the first application 104 and are received by the at least one button 404; and data inputs 708 provide data to the first application 104 or change data being displayed by the first application 104, and are received by the at least one data display 406. The at least one command of the action script 702 performs an action at the second application 112 that is a translation of the action at the first application 104 which is triggered by the navigation input 706. In this way, the inputs to the first application 104 are mapped to commands at the second application 112 in the form of action scripts 704 maintained by the execution controller 108.

At step 602, the first action script 702a added to the ordered stack 704 of action scripts 702 corresponds to a first navigation input 706a received at the first application 104. Action scripts 702 can also correspond to a data input 708 received at the first application 104. Data inputs 708 corresponding to an action script 702 provide data to populate parameters of the commands of the action script 702. However, at step 602 the added first action script 702a is added to the ordered stack 704 of action scripts 702 as yet unpopulated by any data related to a corresponding data input 708.

The ordered stack 704 of action scripts 702 represents the service the execution controller 108 requests 306 from the second application 112. The execution controller 108 stores the ordered stack 704 of action scripts 702 in the memory 206, which for this purpose may optionally comprise a relatively fast memory such as a cache.

At step 602, the first action script 702a which is added to the ordered stack 704 of action scripts 702 is added last in an order 710 of the ordered stack 704 of action scripts 702. The ordered stack 704 of action scripts 702 is arranged according to the order 710 of the ordered stack 704 of action scripts 702, from an action script 702 which is first in the order 710, i.e. which has been added first, to an action script 702 which is last in the order 710, i.e. which has been added last. The order 710 of the action scripts 702 is the order in which the action scripts are executed at the second application 112. The service requested 306 from the second application 112, which is represented by the ordered stack 704, thus comprises the commands, and any accompanying data, of each of the action scripts 702 in the ordered stack 704 of action scripts 702, executed according to the order 710.

In one embodiment, the ordered stack 704 of action scripts 702 comprises a plurality of action scripts 702. In one embodiment, a specific single action script 702 of the ordered stack 704 of action scripts 702 comprises a plurality of commands for execution at the second application 112.

In the embodiment depicted in FIG. 6, the method 600 proceeds to step 604 after step 602. At step 604, the execution controller 108 provides the ordered stack 704 of action scripts 706 to the second application 112 for execution by the second application 112. The providing of the ordered stack 704 of action scripts 702 to the second application 112 by the execution controller 108 of step 604 of method 600 corresponds, generally speaking, to the execution controller 108 requesting the service from the second application of step 306 of method 300. In one embodiment, the requesting the service from the second application 112 by the execution controller 108 of step 306 of method 300 comprises the providing of the ordered stack 704 of action scripts 702 by the execution controller 108 of step 604 of the method 600.

In the embodiment depicted in FIG. 6, the method 600 proceeds to step 606 after step 604. At step 606, the ordered stack 704 of action scripts 702, having the unpopulated added first action script 702a, is executed at the second application 112 according to the order 710 of the ordered stack 704 of action scripts 702. The executing of the ordered stack 704 of action scripts 702 at the second application 112 of step 606 of the method 600 corresponds, generally speaking, to the second application 112 performing the service of step 308 of the method 300. In one embodiment, the second application 112 performing the service of step 308 of the method 300 comprises the executing of the ordered stack 704 of action scripts 702 at the second application 112 of step 606 of the method 600.

In the embodiment depicted in FIG. 5, the method 600 proceeds to step 608 after step 606. At step 608, the added first action script 702a is populated with data related to a first data input 708a received at the first application 104. In one embodiment, the added first action script 702a is populated with data comprising data of the first data input 708a received at the first application 104. The populating of step 608 occurs after the executing of step 606, and the first data input 708a is a data input to the second state 402b of the first application 104. That is, the first navigation input 706a navigates the first application 104 from the first state 402a to the second state 402b, at which point the user enters the first data input 708a. However, according to the method 600, the ordered stack 704 of action scripts 702 is executed by the second application 112 before the added first action script 702a, corresponding to the first navigation input 706a, is populated with data related to the first data input 708a at the second state 402b. It is only at step 608 that the added first action script 702a is populated with data related to the first data input 708a.

In one embodiment, the populating of step 608 comprises inserting a value from the data input field 408 of the first application 104 into a command of a corresponding action script 702. In one embodiment, the value of the data input field 408 comprises at least one of: a numerical value, or a textual value. In one embodiment, the populating of step 608 comprises inserting a data file provided by the user to the data input field 408 into a command of a corresponding action script 702. The data file optionally comprises at least one of: a cad file, a word processing file, an bitmap image file, a vector image file, or other suitable data file formats.

FIGS. 7A-G are schematic diagrams which depict some aspects of an exemplary performance of one embodiment of the method 600 in further detail. FIGS. 7A-G depict the first application 104 and the execution controller 108 at certain successive moments in time during the performance of the method 600. FIG. 7A depicts the first application 104 and the execution controller 108 at a moment in time before the user provides the first navigation input 706a to the first application 104. In FIG. 7A, the first application 104 is in the first state 402a, and the execution controller 108 has maintained the ordered stack 704 of action scripts 702 that comprise any previously added and populated action scripts 702. In FIG. 7A, the ordered stack 704 of action scripts 702 is shown containing a single, populated action script 702, however, depending on the use of the first application 104 previously to FIG. 7A, many different configurations of the ordered stack 704 of action scripts 702 are possible. For example, the ordered stack 704 may comprise a plurality of action scripts 702, some which have been populated by corresponding data inputs 708 and some that have never been populated with corresponding data inputs 708. For example, not all action scripts 702 correspond to data inputs 708. If there are no data inputs 708 corresponding to a particular action script 702, for example if the user navigated to a particular state 402 of the first application 104, but did not then provide a data input 708 to that particular state 402, and instead, for example, navigated to a different state 402, then the populating of step 608 does not need to occur for that particular action script 702.

FIG. 7B depicts at a moment in time in which the user provides the first navigation input 706a to the first state 402a of the first application 104. FIG. 7C depicts a moment in time, subsequent to the moment depicted in FIG. 7B, in which the first unpopulated action script 702a has been added to the ordered stack 704, the executing of the ordered stack 704 of step 606 has occurred, and the first navigation input 706a has navigated the first application 104 to the second state 402b from the first state 402a. In the embodiment depicted in FIGS. 7A-G, the executing of step 606 can occur at a moment of time subsequent to FIG. 7B and before FIG. 7C. FIG. 7D depicts a moment in time, subsequent to the moment depicted in FIG. 7C, in which the user provides the first data input 708a to the second state 402b of the first application 104. FIG. 7E depicts a moment in time, subsequent to the moment depicted in FIG. 7D, in which the first action script 702a added to the ordered stack 704 has been populated by data related to the first data input 708a.

The moment in time depicted in FIG. 7E is similar in nature to the moment in time depicted in FIG. 7A. That is, the process of the embodiment of the method 600 started in FIG. 7A essentially begins again at FIG. 7E. At the moment in time depicted in FIG. 7E, the first application 104 is in the second state 402b, and the execution controller 108 is maintaining the ordered stack 704 having all the action scripts 702 that have been previously added to the ordered stack 704. In a similar way to FIG. 7B, FIG. 7F depicts a moments in time in which a second navigation input 706b is provided to the first application 104 by the user; and in a similar way to FIG. 7C, FIG. 7G depicts a moment in time, subsequent to the moment depicted in FIG. 7F, in which a second unpopulated action script 702b has been added to the ordered stack 704 of action scripts 702, and the first application 104 has navigated to a third state 402c of the first application 104. Furthermore, in the depicted embodiment, at some moment in time between the moments depicted in FIGS. 7F and 7G, the ordered stack 704 of action scripts 702 having the added unpopulated second action script 702b and the populated first action script 702a is executed at the second application 112.

One benefit provided by the populating of step 608 occurring after the executing of step 606 is to correctly align the stateful execution of the first application 104 to the stateless execution of the second application 112. For example, with each action script 702 added to the ordered stack 704 of action scripts 702, the previously added action script 702 needs to be populated with data to ensure that the state 402 of the second application 112 encountered by the newly added action script 702 corresponds correctly to the state 402 of the first application 104 at the time of the newly received corresponding navigation input 706, i.e. having accounted for the previously received data input 708. In this way, the method 600 enables consistency between the stateful execution of the first application 104 and the stateless execution of the second application 112.

In one embodiment, with each successive navigation input 708 received at the first application 104, the number of action scripts 702 in the ordered stack 704 of action scripts 702 increases.

Each state 402 of the first application 104 can correspond to an individual state 402of the second application 112 or a plurality of states 402 of the second application 112, giving a developer maximum flexibility in designing and developing the first application 112. For example, in a scenario in which the first application 104 is developed to update a user interface of the second application 112 but retain, at least in part, the business logic and associated business functionality of the second application 112, the graphical user interface 106 of the first application 104 can be designed to correspond to functionality and data from various states 402 of the second application 112. In this way, the graphical user interface 106 of the first application 104 is not limited by, and does not necessarily need to conform to a particular sequence or configuration of states 402 of the user interface of the second application 112.

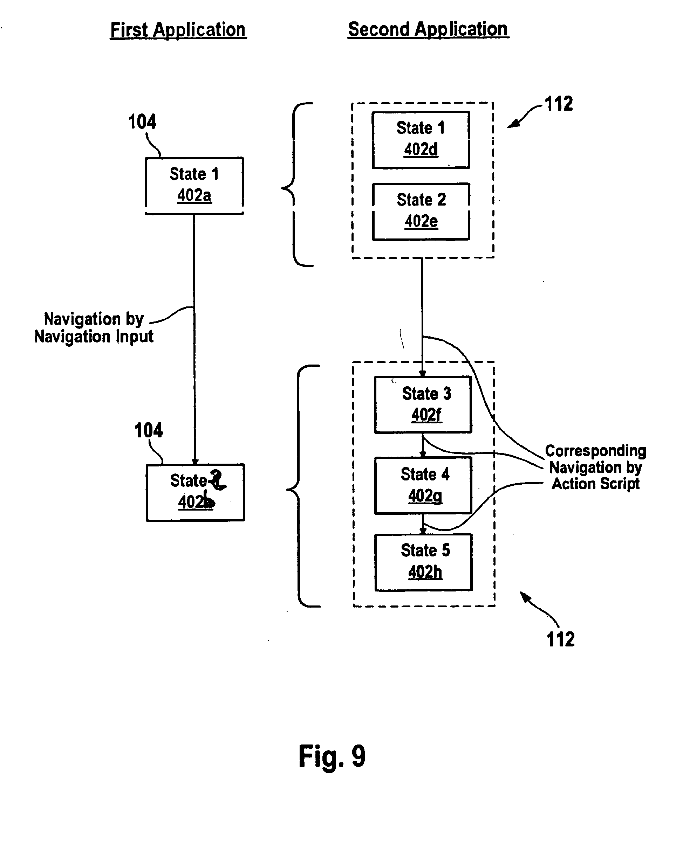

In one embodiment, the first state 402a of the first application 104 comprises elements corresponding to at least one first state 402 of the second application 112, and the second state 402b of the first application 104 comprises elements corresponding to a plurality of second states 402 of the second application 112. FIG. 9 depicts one example of such an embodiment. In exemplary embodiment depicted in FIG. 9, the first state 402a of the first application 104 comprises elements that correspond to two different states 402d,e of the second application 112, and the second state 402b of the first application 104 comprises elements that correspond to three different states 402f,g,h of the second application 112. Although the exemplary embodiment depicted in FIG. 9 illustrates both the first and second states 402a,b of the first application 104 as each comprising elements from a plurality of states 402 of the second application 112, either the first or second state 402a,b of the first application 104 may instead comprise elements from only one state 402 of the second application 112.

In embodiments in which the first state 402a of the first application 104 comprise elements corresponding to at least one first state 402 of the second application 112, and the second state 402b of the first application 104 comprises elements corresponds to a plurality of second states of 402 the second application 112, the executing of the first action script 702a at the second application 112 by the execution controller 108 navigates from the at least one first state 402 of the second application 112 through all of the plurality of second states 402 of the second application 112, as depicted in FIG. 9. In this way, the executing of the first action script 702a visits each of the plurality of second states 402 of the second application 112 to gather information needed to show all of the elements of the second state 402b of the first application 104.

The second application 112 may require an input, e.g. data, responsive to a state402 of the second application 112 visited during the execution of the action script 702. In one embodiment, only one of the plurality of second states 402 of the second application 112 requires a responsive input, and this second state 402 requiring input is navigated to last in an order of a navigation sequence of the plurality of second states 402 of the second application 112 during the executing of the first action script 702a. Navigating to the second state 402 requiring input last in the navigation sequence can prevent the action script 702 from encountering an error which would prevent the successful execution of the entire ordered stack 704 of action scripts 702.

In one embodiment, the ordered stack 704 of action scripts 702 comprises a plurality of action scripts 702, and the executing of the ordered stack 704 of action scripts 702 of step 606 comprises executing all of the plurality of action scripts 702 in the ordered stack 704, and the executing comprises: launching the second application 112 only at the beginning of the executing of the ordered stack 704 of action scripts 702, and terminating the second application 112 upon completion of the executing of the ordered stack 704 of action scripts 702.

In one embodiment, the first application 104 comprises the graphical user interface 106 wherein the graphical user interface 106 is accessed in real-time by a human user, and the second application 112 comprises a batch input functionality that processes batches of commands without requiring real-time access by a human user for each command. For example, in one such embodiment, the graphical user interface 106 of the first application 104 is displayed on the display 212 to the user, who then provides input using the input device 202. The second application 112 runs in a process which is not visible to the user, and is not displayed on the display, for example, in one embodiment, by using the batch input capability. The first application 104 and the execution controller 108, in one embodiment, are typically located in a portion of the memory 206, and executed by a first processor204, which are at least partially local to the user. The second application 112, in one embodiment, is typically located in a portion of the memory 206, and executed by a second processor 204, which is at least partially remote from the user.

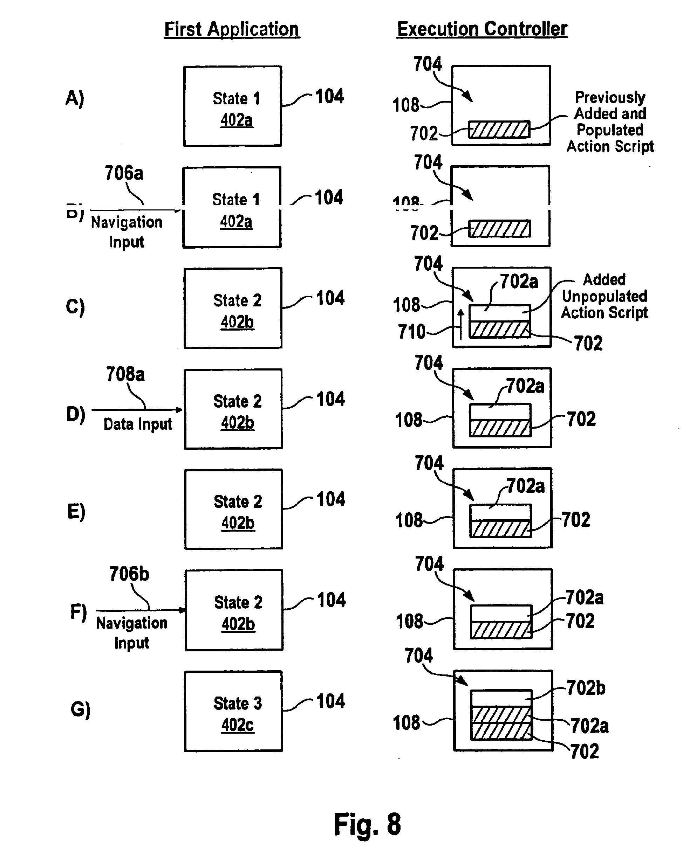

The populating of step 608 can be triggered in different ways to provide different operating characteristics of the method 600. In one embodiment, the populating of the added first action script 702a is triggered in response to at least one of: receiving the first data input 708a at the first application 104, or receiving the second navigation input 706b at the first application 104. For example, in the embodiment depicted in FIG. 7, the populating of the added first action script 702a is triggered in response to the receiving of the first data input 708a at the first application 104. In other embodiments, however, the populating of the added first action script 702a is triggered in response to the receiving the second navigation input 706b at the first application 104. FIG. 8 depicts one embodiment in which the populating of the added first action script 702a is triggered in response to the receiving of the second navigation input 706b at the first application 104. The embodiment depicted in FIG. 8 is identical to that depicted in FIG. 7, except that the populating of the added first action script 702a is triggered in response to the receiving of the second navigation input 706b, and thus the embodiment depicted in FIG. 8 differs from that depicted in FIG. 7 in that the added first action script 702a remains unpopulated in FIGS. 8E-F, whereas the added first action script 702a is populated in FIGS. 7E-F. FIG. 8G shows the added first action script being populated after the receiving of the second navigation input 706b. In the embodiment depicted in FIG. 8, the added first action script 702a is populated and the second action script 702b is added to the ordered stack 704 after the receiving of the second navigation input 706b and before a subsequent executing of the ordered stack 704, the subsequent executing occurring, in the depicted embodiment, between the moments in time depicted by FIGS. 8F-G.

In one embodiment, the steps of the method 600 are repeated in a cyclic fashion. That is, in one embodiment, the method 600 comprises sequentially adding a plurality of action scripts 702 to the ordered stack 704 of action scripts 702, each of the plurality of action scripts 702 corresponding to one of a plurality of navigation inputs 706 received at the first application 104, and each time a new action script 702 is added, the method 600 comprises: leaving the newly-added action script 702 unpopulated by data input 708, populating a most-previously added action script 702 with corresponding one of a plurality of data inputs 708 received at the first application 104, and executing the entire ordered stack 704 of action scripts 702 at the second application 112.

In some cases, the second application 112 may be unable to completely execute the entire ordered stack 704 of action scripts 702. For example, the second application 112 may generate an error message or an information message during the executing of the commands of the ordered stack 704 of action scripts 702 which may stop the executing if the message requires a responsive input. The generated message optionally comprises at least one of: an error message, or an information message. In a scenario in which these messages are unanticipated by the action script 702, there may not be necessary commands within the action script 702 to navigate the messages. The result may be that the service represented by the ordered stack 704 is not completely performed.

In one embodiment, the method 600 accounts for the incomplete executing of the ordered stack 704 by the execution controller 108 removing the added unpopulated action script 702 from the ordered stack 704 in response to the incomplete executing at the second application 112. The execution controller 108 communicates with the first application 104 regarding the incomplete executing and removal of the added action script 702 from the ordered stack 704. The execution controller 108 also optionally is able to map the message encountered at the second application 112 to an appropriate communication with the first application 104. For example, an error message encountered at a particular state 402 of the second application 112 can be mapped to a suitable error message at a corresponding state 402 of the first application 104, and an information message can be mapped in a similar way. Additionally, the execution controller 108 can be programmed to distinguish between error messages and information messages. In the case of some information messages, the execution controller 108 can dynamically insert commands into to the action script 702 to overcome the information messages and promote complete execution of the ordered stack 704.

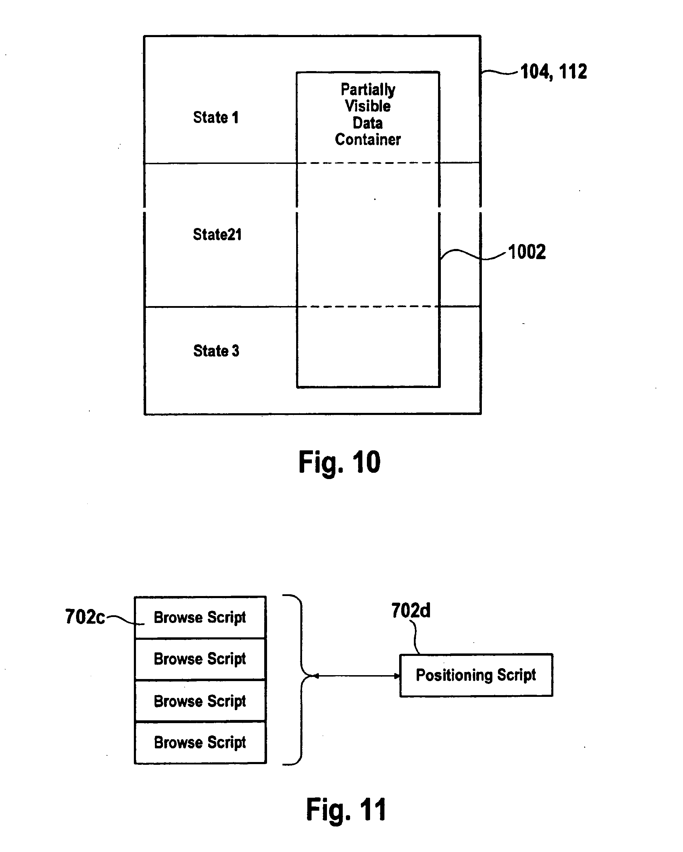

In one embodiment, a particular second state 402 of the plurality of second states 402 of the second application 112 comprises a data container 1002 having contents which are only partially available, i.e. visible, to the particular second state 402. For example, a particular second state 402 of the second application 112 may comprise a first portion of a table from the database 116, the complete table being completely visible only by visiting a plurality of second states 402 of the second application 112. FIG. 10 is a schematic diagram depicting one embodiment of a partially-visible data container 1002 of either the first application 104 or the second application 112.

In one embodiment of the method 600, the execution controller 108 dynamically inserts browsing commands into the added action script 702 to retrieve the entire partially-visible data container 1002. For example, in one embodiment, a predetermined number of browsing commands are inserted into the added action script 702 by the execution controller 108 to retrieve portions of the data container 1002 not available to a particular second state 402. Because it sometimes cannot be known in advance how large the partially-visible data container 1002 is, in one embodiment each of the predetermined number of browsing commands are evaluated to determine if they have returned new portions of the data container 1002. Evaluation of the results of the browsing commands optionally comprises examining a key of the data container 1002 returned by the browsing commands. For example, if the data container 1002 is a database table, a key of the table has unique value for each row of the table, and as such, the data returned by the browsing commands can be examined to determine if new values of the key are returned. If each of the default number of browsing commands returns new portions of the data container 1002, additional browsing commands are inserted into the added action script 702 by the execution controller 108 and then the entire ordered stack 704 of action scripts 702 is re-executed at the second application 112. This process is repeated until all portions of the partially-visible data container 1002 are retrieved.

In one embodiment, the minimum number of browsing commands required to retrieve the entire contents of the data container 1002 is determined, and this minimum number is stored by the execution controller 108 for future use by the execution controller 108. Thus, a subsequent access of the partially-visible data container 1002 may be more efficient and may require less trial and error determination of the correct number of browsing commands. The storing of the minimum number associates the minimum number with at least one of: an identity of the partially-visible data container 1002, or an identity of the particular second state 402 of the second application 112 having the partially-visible data container 1002. In one embodiment, the predetermined number of browsing commands inserted into the added action script 702 by the execution controller 108 is the most-previously stored minimum number of browsing commands required to retrieve the entire contents of that partially-visible data container 1002.

One benefit of retrieving the entire partially-visible data container 1002 by dynamically inserting browsing commands is that the need for back and forth adding and executing of browsing action scripts 702c (shown in FIG. 11) can be eliminated in the case in which the user of the first application 104 decides to browse a data container in the first application 104 corresponding to the partially-visible data container 1002 of the second application 112. In such a case, the entire data container has already been retrieved and the user can thus browse it in the first application 104 without back and forth adding and executing of browsing action scripts 702c by the fist application 104, execution controller 108 and second application 112.

In one embodiment, browsing commands to retrieve the entire contents of the partially-visible data container 1002 are only dynamically inserted into an action script 702 if that action script 702 is the last action script 702 in the order 710 of the ordered stack 704 of action scripts 702. In such an embodiment, action scripts 702 prior to the last action script 702 in the order 710 of the ordered stack 704 are not altered by the controller 108 to retrieve the entire partially-visible data container 1002. Furthermore, in one embodiment, previously added browsing commands are removed from action scripts 702 other than the last action script 702 in the ordered stack 704. Such browsing commands can be instead replaced with positioning commands if necessary.

The navigation input 706 received at the first application 102 may access a particular portion of a data container of the first state 402a of the fist application 104, for example a particular entry in a large database table, which has a corresponding entry in a corresponding data container accessed by the second application 112. Furthermore, accessing the corresponding portion in the corresponding data container in the second application 112 may require executing one or more browsing commands at the second application 112. In one embodiment, instead of using browsing commands to access the corresponding particular portion in the second application 112, the execution controller 108 inserts a positioning command into the added action script 702 to access the corresponding portion of the corresponding data container in the corresponding second state 402 of the second application 112. Thus, the added action script 702 uses the positioning command to directly address the corresponding portion without using browsing commands to browse to the corresponding portion, which may be more efficient because a single positioning command may replace a plurality of browsing commands in certain scenarios.
[58] FIG. 11 is a schematic diagram depicting one embodiment of a correspondence between browsing commands and positioning commands. In the depicted embodiment, a plurality of browsing action scripts 702c, each containing at least one browsing command, are equivalent to a single positioning action script 702d, containing one positioning command.

In one embodiment, the navigation input 706 received at the first application 104 comprises selecting a particular portion of a data container of the first state 402a of the fist application 104, and the method 600 comprises inserting a positioning command into the added action script 702 by the controller 108 to position a corresponding data container relative to a corresponding second state 402 of the second application 112 so that a portion of the corresponding data container corresponding to the selected portion of the data container in the first state 402a of the first application 104 is a first available portion of the corresponding data container available to the corresponding second state 402 of the second application 112. Subsequently, any commands directed to the positioned data container in the corresponding second state 402 of the second application 112 may act directly on the first available portion (corresponding to the selected portion) without requiring further browsing commands in the second application 112.

Further embodiments are also possible, which are the result of variously combining steps, elements or embodiments described herein. For example, further embodiments may comprise an altered order of the steps of the methods 300 and 600 described herein, the result of which may be an embodiment particularly suited to a specific purpose or implementation. In another example, embodiments of the methods 300 and 600 may include or exclude optional steps described herein. In yet another example, embodiments of the methods 300 and 600 may be combined to create further embodiments. Additional embodiments, which would be discernable based on the description herein, are also possible.

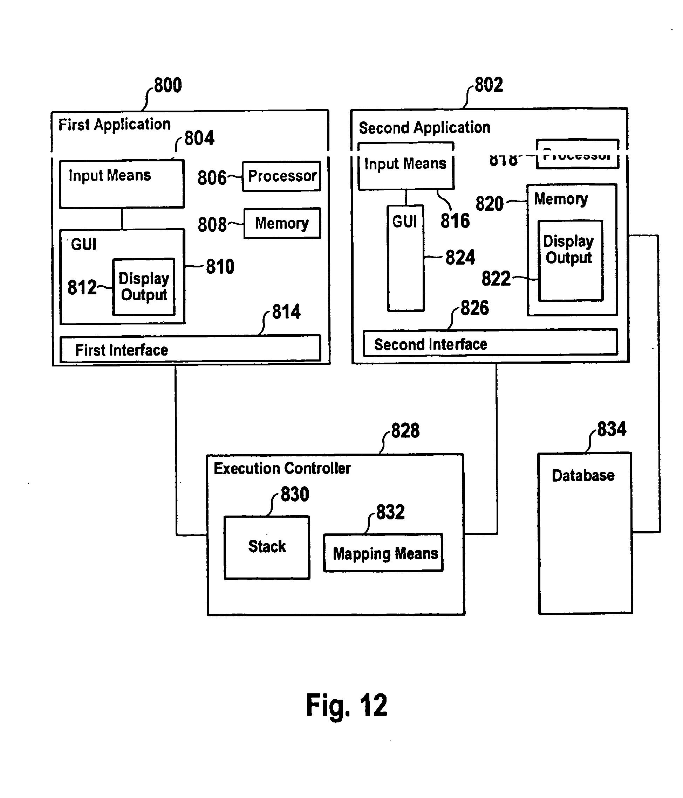

Fig. 12 shows an embodiment of a software architecture comprising a first application 800 and a second application 802. Thereby, the first application comprises input means 804 like for example a keyboard, mouse, haptic input means, input means relating to voice commands etc. The first application 800 further comprises a processor 806 adapted to execute computer executable instructions which may be comprised in a memory 808. The first application 800 further comprises a graphical user interface 810 which is adapted to provide a display output 812 to a user. The first application 800 further comprises a first interface 814 adapted to communicate with an execution controller 828.

Similarly to the first application 800 the second application 802 comprises input means 816, a processor 818, a memory 820, a graphical user interface 824 and a second interface 826.

The major difference between the first application 800 and the second application 802 is that the graphical user interface 824 of the second application 802 may for example be rather outdated and a user uses the graphical user interface 810 of the first application 800 to retrieve data or in general display outputs 822 originally designated for the graphical user interface 824 on its new graphical user interface 810. Thereby, the graphical user interface 810 compared to the graphical user interface 824 may possess a new design, new functionalities etc.

However, since a user will only access the first application 800 via the input means 804, the first application 800 needs to access the second application 802. This is done by a connection between the first interface 814 of the first application and the second interface 826 of the second application. Since the graphical user interface 810 with its display output 812 may comprise new functionalities, new design and therewith also rearrangement of the display outputs 822 originally designated for the graphical user interface 824, a mapping between the display output 822 and the new display output 812 is to be performed. This is done by an execution controller 828 which is interposed in between the first interface 814 and the second interface 826. The execution controller 828 comprises mapping means 832 and a stack 830.

The stack 830 has the purpose that all navigation steps and data input steps which are performed via the input means 804 at the first application 800 are recorded by the execution controller 828, wherein for each new navigation input or data input the new input is added to the ordered stack 830. After each of the input steps the stack is passed from the execution controller 828 to the second interface 826 of the second application 802.

The second application is adapted for 'dark processing', which has to be understood as a processing in such a way, that the user at the first application 800 does not see the results of the processing, nor that the graphical user interface 810 with its display output 812 is necessarily updated by the end of the processing. For this purpose, the second interface 826 comprises a batch input functionality and the stack 830 is batch processed by the processor 818 of the second application 802. After batch processing of the stack 830, the second application 802 generates a respective display output 822. However, this display output 822 is not sent to the graphical user interface 824 but it is mapped using the mapping means 832 to the new display output 812 on the graphical user interface 810 of the first application 800.

Only after a respective command ('apply') is sent from the input means 804 to the second application 802, the stack 830 is processed in a final processing step such that the results generated by processing the stack 830 are written to a database 834 connected to the second application 802.

The reason for using the software architecture depicted in fig. 12 is that for example software programs frequently go through many version cycles. Often, new versions provide maintenance upgrades, such as security enhancements or bug fixings. New versions can also provide substantive changes such as altering a user interface or altering the back end processing or functionality, even when it is processing that is not observed by the user. For example, current enterprise resource planning (ERP) systems help to automate business practices by using sophisticated business logic on the back end (here: second application) and dynamic user interfaces on the front end (here: first application). In the present example, the dynamic user interface on the front end can for example be the graphical user interface 810 of the first application 800, wherein the user interface which needs to be upgraded is the user interface 824 of the second application 802. By using the mapping means 832, it is possible to operate the second application 802 with means of the first application 800 which allows upgrading for example legacy software like the second application 802 in a highly effective manner.

The first application 800 and the second application 802 may be comprised on a server, PDA, laptop etc. Transmitting of the data from the first interface to the second interface via the execution controller may be performed using network devices, routers, Ethernet cables, Ethernet cards, wireless cards etc. The display outputs may be presented to a user on any kind of display like TV monitor, LCD display, laptop monitor etc.

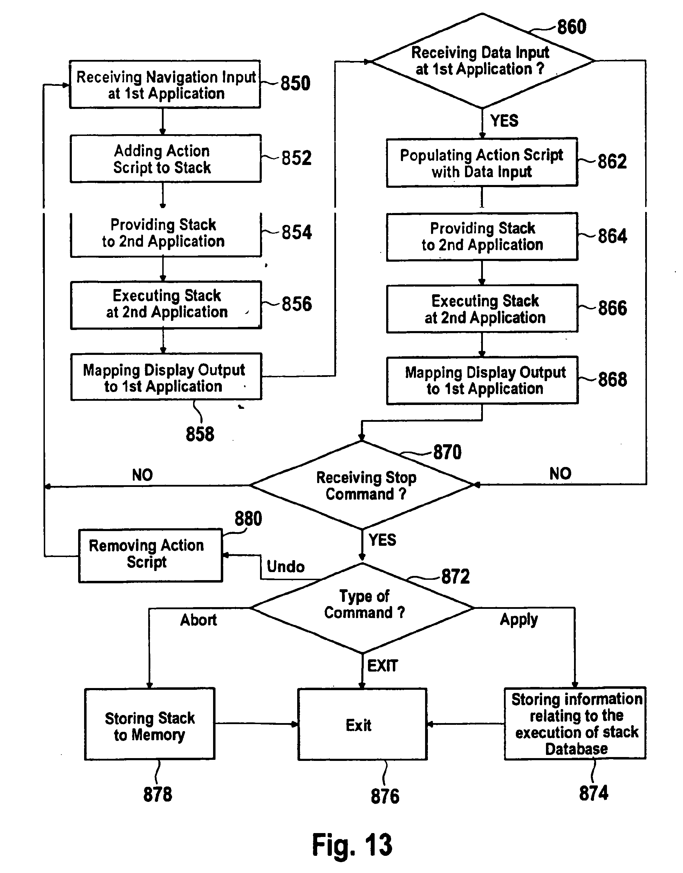

Fig. 13 shows a computer implemented method of providing a first graphical user interface of a first application for a second application. In step 850, a first navigation input is received at a first application. For example, the graphical user interface of the first application provides a display output to a user with the possibility to navigate to subsequent display outputs by using respective navigation buttons of the graphical user interface of the first application.

After having received the respective navigation input at a first application in step 850, the received navigation input is added as an action script to an existing or newly generated ordered stack of action scripts in step 852. In step 854, the stack is provided to the second application with means of an execution controller. This is followed by execution of the stack at a second application in step 856, wherein in step 858 a display output generated by execution of the stack at a second application in step 856 is mapped by the execution controller in step 858 to the first application. Therewith, starting with step 850 and ending with step 858, a user navigates from a given display output to a subsequent display output at graphical user interface of the first application, which is then presented in step 858 to the user.

In step 860 the system has to decide if data input is received at the first application with respect to the actually displayed output presented to a user at the first application. In case data input is received and also the user selects a respective 'data submission button', in step 862 the action script added in the previous step 852 to the stack is populated with the received data input. In step 864, the stack comprising the populated action script is then provided to the second application, which in step 866 executes the stack comprising the populated action script. In step 868, the result from execution of the stack at the second application is mapped to the first application, which is now able to display the respective display output.

In step 870 it is determined, if a stop command is received either after step 868 or after step 860. In case no stop command is received, the steps 850 to 870 are repeated.

However, in case in step 870 a stop command is received, in step 872 the type of the stop command (undo, apply, abort, exit) is determined.

In case an undo command is received, in step 880 the last added action script in the stack of action scripts is removed from the stack and the steps 850 to 870 and optionally to 872 are repeated.

If in step 872 it is determined that an apply command is received, in step 874 information relating to the execution of the stack, i.e. the result from execution of the stack at a second application is stored in a database, and afterwards the method is terminated in step 876.

In case in step 872 an abort command is received, the actual stack of action scripts is stored to a memory in step 878. This allows reloading the stored stack later on in order to continue after loading of the stack from steps 850 as described above. After having stored the stack to the memory in step 878, the method proceeds to step 876 which means that the execution of the method is terminated.

In case an exit command is received in step 872, in step 876 the method of providing a first graphical user interface of a first application for a second application is terminated immediately.

Fig. 14 depicts an exemplary interaction a user would perform with a new user interface which accesses the transactional logic of an older integrated application by communicating through the mappings of an execution controller. Over time, the user is inputting data into input screens 900 and 901. These input screens are using a new interface logic. Thus, data is now being sent through a controller 828, which sends data through a mapping 832 to the old interface logic 826. The old user interface processes the data by the transactional logic 908 and potentially updates data 910. Messages, data updates, and attributes of data are then relayed back through to the mapping either directly 906 or indirectly 904 to 905. The map data is sent through the controller 828 to the new input screen 903.

Fig. 15 depicts an example where a controller, in this case the controller 828 communicates with a backend integrated application to return a new user interface. Thereby, the backend integrated application corresponds to the second application. A user may input data 950 into an input screen 952. When the user requests the 'next' 954 screen the input screen sends data 956 to the controller 826. The data 958 may include input 950 from the input screen 952. The controller 826 takes this information and sends it to an integrated application for processing with the integrated applicants transactional logic. The controller receives and transmits 960 any pertinent information to develop the new user interface. For example, new data may include prior storage data 958 or messages, process data, and data attributes 962. The interface logic then uses this data to dynamically create a new user interface and to provide the user with knowledge of the processing that occurred along with new information or related attributes of the data 964 and 966. The interface can also display to the user the process chain 968 as well as the indicator 970 where the user is located in the current interactive process.

Fig. 16 depicts the example logic that may be performed in order to map and transmit information between a first display output to the second display output of an integrated application (second application) in order to create a third display output for interaction with a user. In an exemplary embodiment logic, a first display output is displayed to a user in step 1800, wherein this display was created by an interface logic of a new application (first application). The interface awaits an input and in case in step 1809 an input is received either by mouse click which chooses data or a keyboard input, the received user input in step 1801 is sent in step 1802 by an event listener as a first set of data to the controller. In step 1803, the controller maps information relating to the first set of data to a second display output usable by the second application. In step 1804 the generated second set of data is sent to the interface of the second application (integrated application). The transactional logic of the integrated application processes in step 1805 the data and transmits a resulting third set of data to the controller in step 1806. The controller uses in step 1807 its mapping means or user interface logic to combine mapping information with the third set of data and transmits the resulting third display output in step 108 to the new application (first application). The process is repeated starting with step 1809.

If step 1809 returns that no input is received, it has to be decided in step 1810 if the processing is completed yet or not. If the processing is not completed, the procedure is restarted with step 1809. However, if the processing is completed, the procedure terminates in step 1811.

## Claims

1. A computer implemented method of providing a first graphical user interface (106; 810) of a first application (104; 800) for a second application (112; 802),
- the second application (112; 802) comprising a second graphical user interface (824) presentable on a display of the second application (112; 802) for a users navigation through a number of display outputs of the second application (112; 802);
- the second application (112; 802) further comprising an interface (826), the interface (826) comprising a batch input functionality, wherein said interface (826) is adapted to receive a stack (830) of action scripts specifying said navigation through the number of display outputs, wherein the second application (112; 802) executes the stack (830) of action scripts, wherein the execution of the stack (830) is performed by batch processing;
- the first application (104; 800) comprising a first interface (814), wherein the first interface (814) is adapted for communication with the interface (826), of the second application;
- the first application (104; 800) further comprising the first graphical user interface (106; 810) presentable on a display of the first application (104; 800), wherein the display outputs of the second application (112; 802) are mapped to the display outputs of the first application (104; 800) by mapping means (832), included in an execution controller (828);
the method comprising:
- receiving a navigation input at the first application (104; 800), the navigation input specifying a users navigation from a current display output of the first application (104; 800) to a next display output of the first application (104; 800), wherein the current display output has been mapped from a display output of the second application (112; 802) to the display output of the first application (104; 800) by the mapping means (832);
- adding an action script to an ordered stack (830) of action scripts maintained by the execution controller, wherein the added action script corresponds to the navigation input, wherein the added action script is added last in the order of the ordered stack (830), wherein the added action script is unpopulated by data input;
- providing the ordered stack (830) of action scripts to the second interface (826) by the execution controller;
- executing the ordered stack (830) of action scripts by the second application (112; 802) according to the order given by the ordered stack (830) of action scripts;
- mapping a display output of the second application (112; 802) resulting from the execution of the ordered stack (830) to the next display output of the first application (104; 800) by the mapping means (832);
- receiving a data input at the first graphical user interface (106; 810), the data input being received with respect to said next display output;
- populating the added action script with said data input;
- providing the ordered stack (830) of action scripts comprising the populated action script to the second interface (826) by the execution controller;
- executing the ordered stack (830) of action scripts comprising the populated action script by the second application (112; 802) according to the order given by the ordered stack (830) of action scripts;
- mapping a display output of the second application (112; 802) resulting from the execution of the ordered stack (830) comprising the populated action script to a next consecutive display output of the first application (104; 800) by the mapping means (832);
- repeating the previous steps until a stop command is received at the first graphical user interface (106; 810) of the first application (104; 800).

2. The method of claim 1, wherein in case it is not possible to populate the added action script with data input, the steps previous of receiving a data input are again performed.

3. The method of claim 1 or 2, wherein
- the display output of the first application (104; 800) comprises elements comprised in a plurality of display outputs of the second application (112; 802); and
- executing of the added action script comprises navigating from a display output of the second application (112; 802) through all of the plurality of display outputs of the second application (112; 802).

4. The method of any of the previous claims, the method further comprising:
- launching the second application (112; 802) only at the beginning of the executing of the ordered stack (830) of action scripts; and
- terminating the second application (112; 802) upon completion of the executing of the ordered stack (830) of action scripts.

5. The method of any of the previous claims, wherein
- the batch input functionality of the second application (112; 802) is adapted to process batches of commands without requiring real-time access by a user for each command; and
- the execution controller is capable of communicating with both the first application (104; 800) and the second application (112; 802) via the first and the second interfaces (826).

6. The method of any of the previous claims, wherein the populating is triggered by receiving the data input at the first application (104; 800) or by receiving a further navigation input at the first application (104; 800).

7. The method of any of the previous claims, further comprising removing the added action script from the ordered stack (830) of action scripts in case the ordered stack (830) of action scripts is incompletely executed at the second application (112; 802), wherein the added action script is populated or unpopulated.

8. The method of claim 7, wherein the incomplete executing of the ordered stack (830) of action scripts is signalled by the second application (112; 802) by means of a message being generated by the second application (112; 802).

9. The method of claim 8, wherein in case of the incomplete executing the execution of the ordered stack (830) is stopped at the second application (112; 802), wherein the signalled message requires a responsive input for the executing to continue.

10. The method of claim 8 or 9, wherein the signalled message is an error message or an information message.

11. The method of any of the previous claims, wherein the display output of the second application (112, 802) comprises contents of a second data container, wherein the contents of the second data container are only partially available at the display output of the second application (112; 802), the method further comprising:
- inserting a predetermined number of browsing commands into the added action script by the controller, the browsing commands being adapted to retrieve contents of the second data container currently not available to said display output of the second application (112; 802);
- evaluating if each of the predetermined number of browsing commands returned new contents of the second data container;
- if each of the predetermined number of browsing commands returned new contents of the second data container, inserting additional browsing commands into the added action script by the controller, re-executing the entire ordered stack (830) of action scripts at the second application (112; 802) and repeating the previous steps until the returned contents of the second data container correspond to contents of the data container previously returned by any of the browsing commands;
- determining a minimum number of browsing commands required until the returned contents of the second data container correspond to contents of the data container previously returned by any of the browsing commands; and
- storing, by the controller, said minimum number of browsing commands.

12. The method of any of the previous claims, wherein the navigation input comprises accessing a particular portion of a first data container comprised on the display output of the first application (104; 800), the first data container comprising elements of the second data container.

13. The method of claim 12, further comprising inserting a positioning command into the added action script by the controller, the positioning command being adapted to directly address a portion of the second data container.

14. The method of claim 12, further comprising inserting a positioning command into the added action script by the controller, the positioning command being adapted to topmost position a portion of the second data container relating to the particular portion of the first data container on the display output of the second application (112; 802).

15. The method of any of the previous claims, wherein the stop command received at the first application (104; 800) comprises an abort command or an apply command or an exit command.

16. The method of claim 15, wherein the abort command comprises storing the ordered stack (830) of action scripts to a memory.

17. The method of claim 15, wherein the apply command comprises storing information relating to the execution of the ordered stack (830) of action scripts in a database (834).

18. The method of claim 15, wherein the exit command comprises terminating of the first application (104; 800).

19. The method of any of the previous claims, further comprising receiving an undo command by the first application (104; 800), wherein upon receiving said undo command the added action script in the ordered stack (830) of action scripts is removed from the ordered stack (830) of action scripts or wherein upon receiving said undo command the populated added first action script is unpopulated.

20. The method of any of the previous claims, further comprising maintaining multiple ordered stacks (830) of action scripts associated with multiple first applications (104; 800), wherein the multiple ordered stacks (830) of action scripts are provided to the second application (112; 802) and executed by the second application (112; 802) consecutively.

21. A computer program product comprising computer executable instructions adapted to perform any of the previous method steps.

## Patentansprüche

1. Computer-implementiertes Verfahren zur Schaffung einer grafischen Benutzerschnittstelle (106; 810) einer ersten Anwendung (104; 800) für eine zweite Anwendung (112; 802),
- wobei die zweite Anwendung (112; 802) eine zweite grafische Benutzerschnittstelle (824) aufweist, die auf einer Anzeige der zweiten Anwendung (112; 802) dargestellt werden kann, für eine Navigation eines Benutzers durch eine Reihe von Anzeigeausgaben der zweiten Anwendung (112; 802);
- wobei die zweite Anwendung (112; 802) ferner eine Schnittstelle (826) aufweist, wobei die Schnittstelle (826) eine Batch-Eingabefunktionalität aufweist, wobei die Schnittstelle (826) dafür ausgelegt ist, einen Stapel (830) von Aktionsskripts zu empfangen, die die Navigation durch die Anzahl von Anzeigeausgaben angeben, wobei die zweite Anwendung (112; 802) den Stapel (830) von Aktionsskripts ausführt, wobei die Ausführung des Stapels (830) durch Batch-Verarbeitung durchgeführt wird;
- wobei die erste Anwendung (104; 800) eine erste Schnittstelle (814) aufweist, wobei die erste Schnittstelle (814) dafür ausgelegt ist, mit der Schnittstelle (826) der zweiten Anwendung zu kommunizieren;
- wobei die erste Anwendung (104; 800) ferner die erste grafische Benutzerschnittstelle (106; 810) aufweist, die auf einer Anzeige der ersten Anwendung (104; 800) dargestellt werden kann, wobei die Anzeigeausgaben der zweiten Anwendung (112; 802) von einer Mapping-Einrichtung, die in einem Ausführungs-Controller (828) enthalten ist, den Anzeigeausgaben der ersten Anwendung (104; 800) zugeordnet werden,
wobei das Verfahren umfasst:
- Empfangen einer Navigationseingabe an der ersten Anwendung (104; 800), wobei die Navigationseingabe eine Navigation eines Benutzers von einer aktuellen Anzeigeausgabe der ersten Anwendung (104; 800) zu einer nächsten Anzeigeausgabe der ersten Anwendung (104; 800) angibt, wobei die aktuelle Anzeigeausgabe durch die Mapping-Einrichtung (832) von einer Anzeigeausgabe der zweiten Anwendung (112; 802) zu der Anzeigeausgabe der ersten Anwendung (104; 800) zugeordnet worden ist;
- Hinzufügen eines Aktionsskripts zu einem geordneten Stapel (830) von Aktionsskripts, die vom Ausführungs-Controller verwaltet werden, wobei das hinzugefügte Aktionsskript der Navigationseingabe entspricht, wobei das hinzugefügte Aktionsskript in der Reihenfolge des geordneten Stapels (830) an letzter Stelle hinzugefügt wird, wobei das hinzugefügte Aktionsskript nicht mit Dateneingaben aufgefüllt ist;
- Bereitstellen des geordneten Stapels (830) von Aktionsskripts an die zweite Schnittstelle (826) durch den Ausführungs-Controller;
- Ausführung des geordneten Stapels (830) von Aktionsskripts durch die zweite Anwendung (112; 802) gemäß der Reihenfolge, die vom geordneten Stapel (830) von Aktionsskripts vorgegeben wird;
- Zuordnen einer Anzeigeausgabe der zweiten Anwendung (112; 802), die aus der Ausführung des geordneten Stapels (830) resultiert, zu der nächsten Anzeigeausgabe der ersten Anwendung (104; 800) durch die Mapping-Einrichtung (32);
- Empfangen einer Dateneingabe an der ersten grafischen Benutzerschnittstelle (106; 810), wobei die eingegebenen Daten in Bezug auf die nächste Anzeigeausgabe empfangen werden;
- Auffüllen des hinzugefügten Aktionsskripts mit der Dateneingabe;
- Bereitstellen des geordneten Stapels (830) von Aktionsskripts, der das aufgefüllte Aktionsskript aufweist, an die zweite Schnittstelle (826) durch den Ausführungs-Controller;
- Ausführen des geordneten Stapels (830) von Aktionsskripts, der das aufgefüllte Aktionsskript aufweist, durch die zweite Anwendung (112; 802) gemäß der Reihenfolge, die von dem geordneten Stapel (830) von Aktionsskripts vorgegeben wird;
- Zuordnen einer Anzeigeausgabe der zweiten Anwendung (112; 802), die aus der Ausführung des geordneten Stapels (830), der das aufgefüllte Aktionsskript aufweist, resultiert, auf eine als nächstes folgende Anzeigeausgabe der ersten Anwendung (104; 800) durch die Mapping-Einrichtung (832);
- Wiederholen der bisherigen Schritte, bis ein Stopp-Befehl an der ersten grafischen Benutzerschnittstelle (106; 810) der ersten Anwendung (104; 800) empfangen wird.

2. Verfahren nach Anspruch 1, wobei in einem Fall, wo es nicht möglich ist, das hinzugefügte Aktionsskript mit Dateneingaben aufzufüllen, die Schritte, die dem Empfang einer Dateneingabe vorangehen, erneut ausgeführt werden.

3. Verfahren nach Anspruch 1 oder 2, wobei
- Die Anzeigeausgabe der ersten Anwendung (104; 800) Elemente aufweist, die in einer Mehrzahl von Anzeigeausgaben der zweiten Anwendung (112; 802) enthalten sind; und
- die Ausführung des hinzugefügten Aktionsskripts eine Navigation von einer Anzeigeausgabe der zweiten Anwendung (112; 802) durch die gesamte Mehrzahl von Anzeigeausgaben der zweiten Anwendung (112; 802) umfasst.

4. Verfahren nach einem der vorangehenden Ansprüche, wobei das Verfahren ferner umfasst:
- Starten der zweiten Anwendung (112; 802) nur zu Beginn der Ausführung des geordneten Stapels (830) von Aktionsskripts; und
- Stopp der zweiten Anwendung (112; 802) nach Abschluss der Ausführung des geordneten Stapels (830) von Aktionsskripts.

5. Verfahren nach einem der vorangehenden Ansprüche, wobei
- die Batch-Eingabefunktionalität der zweiten Anwendung (112; 802) dafür ausgelegt ist, Batches von Befehlen auszuführen, ohne für jeden Befehl einen Echtzeitzugriff eines Benutzers zu benötigen; und
- der Ausführungs-Controller in der Lage ist, mit sowohl der ersten Anwendung (104; 800) als auch der zweiten Anwendung (112; 802) über die ersten und zweiten Schnittstellen (826) zu kommunizieren.

6. Verfahren nach einem der vorangehenden Ansprüche, wobei die Auffüllung durch einen Empfang der Dateneingabe an der ersten Anwendung (104; 800) oder einen Empfang einer weiteren Navigationseingabe an der ersten Anwendung (104; 800) ausgelöst wird.

7. Verfahren nach einem der vorangehenden Ansprüche, ferner das Entfernen des hinzugefügten Aktionsskripts aus dem geordneten Stapel (830) von Aktionsskripts umfassend, falls der geordnete Stapel (830) von Aktionsskripts an der zweiten Anwendung (112; 802) unvollständig ausgeführt wird, wobei das hinzugefügte Aktionsskript Daten aufgefüllt ist oder nicht aufgefüllt ist.

8. Verfahren nach Anspruch 7, wobei die unvollständige Ausführung des geordneten Stapels (830) von Aktionsskripts mittels einer Meldung, die von der zweiten Anwendung (112; 802) erzeugt wird, signalisiert wird.

9. Verfahren nach Anspruch 8, wobei im Falle der unvollständigen Ausführung die Ausführung des geordneten Stapels (830) an der zweiten Anwendung (112; 802) beendet wird, wobei die signalisierte Meldung eine Antworteingabe benötigt, damit die Ausführung fortgesetzt werden kann.

10. Verfahren nach Anspruch 8 oder 9, wobei die signalisierte Meldung eine Fehlermeldung ist oder Informationen umfasst.

11. Verfahren nach einem der vorangehenden Ansprüche, wobei die Anzeigeausgabe der zweiten Anwendung (112; 802) Inhalte eines zweiten Datencontainers umfasst, wobei die Inhalte des zweiten Datencontainers an der Anzeigeausgabe der zweiten Anwendung (112; 802) nur teilweise verfügbar sind, wobei das Verfahren ferner umfasst:
- Einfügen einer vorgegebenen Zahl von Suchbefehlen in das hinzugefügte Aktionsskript durch den Controller, wobei die Suchbefehle dafür ausgelegt sind, Inhalte des zweiten Datencontainers, die derzeit für die Anzeigeausgabe der zweiten Anwendung (112; 802) nicht zur Verfügung stehen, abzurufen;
- Bewerten, ob jeder von der vorgegebenen Zahl von Suchbefehlen neue Inhalte aus dem zweiten Datencontainer gebracht hat;
- falls jeder von der vorgegebenen Zahl von Browsing-Befehlen neue Inhalte aus dem zweiten Datenbehälter gebracht hat, Einfügen von zusätzlichen Suchbefehlen in das hinzugefügte Aktionsskript durch den Controller, erneutes Ausführen des gesamten geordneten Stapels (830) von Aktionsskripts an der zweiten Anwendung (112; 802) und Wiederholen der bisherigen Schritte, bis die erhaltenen Inhalte aus dem zweiten Datencontainer den Inhalten des Datencontainers entsprechen, die zuvor von irgendeinem der Suchbefehle gebracht worden sind;
- Bestimmen einer Zahl von Suchbefehlen, die mindestens nötig sind, bis die erhaltenen Inhalte des zweiten Datencontainers Inhalten des Datencontainers entsprechen, die zuvor von irgendeinem der Suchbefehle gebracht worden sind; und
- Speichern der Mindestzahl von Suchbefehlen durch den Controller.

12. Verfahren nach einem der vorangehenden Ansprüche, wobei die Navigationseingabe das Zugreifen auf einen bestimmten Abschnitt eines ersten Datencontainers, der an der Anzeigeausgabe der ersten Anwendung (104; 800) vorhanden ist, umfasst, wobei der erste Datencontainer Elemente des zweiten Datencontainers aufweist.

13. Verfahren nach Anspruch 12, ferner das Einfügen eines Positionierungsbefehls in das hinzugefügte Aktionsskript durch den Controller umfassend, wobei der Positionierungsbefehl dafür ausgelegt ist, einen Teil des zweiten Datencontainers direkt zu adressieren.

14. Verfahren nach Anspruch 12, ferner das Einfügen eines Positionierungsbefehls in das hinzugefügte Aktionsskript durch den Controller umfassend, wobei der Positionierungsbefehl dafür ausgelegt ist, einen Abschnitt des zweiten Datencontainers, der auf den bestimmten Abschnitt des ersten Datencontainers bezogen ist, an der Anzeigeausgabe der zweiten Anwendung (112; 802) an die erste Stelle zu setzen.

15. Verfahren nach einem der vorangehenden Ansprüche, wobei der Stopp-Befehl, der an der ersten Anwendung (104; 800) empfangen wird, eine Abbrechen-Befehl oder einen Anwenden-Befehl oder einen Beenden-Befehl umfasst.

16. Verfahren nach Anspruch 15, wobei der Abbrechen-Befehl das Speichern des geordneten Stapels (830) von Aktionsskripts in einem Speicher beinhaltet.

17. Verfahren nach Anspruch 15, wobei der Anwenden-Befehl das Speichern von Informationen in Bezug auf die Ausführung des geordneten Stapels (830) von Aktionsskripts in einer Datenbank (834) umfasst.

18. Verfahren nach Anspruch 15, wobei der Beenden-Befehl das Schließen der ersten Anwendung (104; 800) beinhaltet.

19. Verfahren nach einem der vorangehenden Ansprüche, ferner das Empfangen eines Rückgängigmachen-Befehls durch die erste Anwendung (104; 800) umfassend, wobei nach dem Empfang des Rückgängigmachen-Befehls das hinzugefügte Aktionsskript im geordneten Stapel (830) von Aktionsskripts aus dem geordneten Stapel (830) von Aktionsskripts entfernt wird, oder wobei nach Empfang des Rückgängigmachen-Befehls das aufgefüllte erste Aktionsskript geleert wird.

20. Verfahren nach einem der vorangehenden Ansprüche, ferner das Verwalten von mehreren geordneten Stapeln (830) von Aktionsskripts, die mit mehreren ersten Anwendungen (104; 800) assoziiert sind, umfassend, wobei die mehreren geordneten Stapel (830) von Aktionsskripts der zweiten Anwendung (112; 802) bereitgestellt werden und von der zweiten Anwendung (112; 802) nacheinander ausgeführt werden.

21. Computerprogrammprodukt, das Computer-ausführbare Befehle beinhaltet, die dafür ausgelegt sind, irgendwelche der vorangehenden Verfahrensschritte auszuführen.

## Revendications

1. Procédé exécuté par ordinateur, pour la réalisation d'une première interface d'utilisateur graphique (106 ; 810) d'une première application (104 ; 800) pour une deuxième application (112 ; 802),
- la deuxième application (112 ; 802) comprenant une deuxième interface d'utilisateur graphique (824), affichable sur un écran de la deuxième application (112 ; 802), pour la navigation d'un utilisateur à travers un certain nombre de sorties d'affichage de la deuxième application (112 ; 802) ;
- la deuxième application (112 ; 802) comprenant en outre une interface (826), l'interface (826) comprenant une fonction d'entrée par lots, où ladite interface (826) est adaptée pour recevoir une pile (830) de scripts d'action spécifiant ladite navigation à travers le nombre de sorties d'affichage, où la deuxième application (112 ; 802) exécute la pile (830) de scripts d'action, où l'exécution de la pile (830) est effectuée selon un traitement par lots ;
- la première application (104 ; 800) comprenant une première interface (814), la première interface (814) étant adaptée pour communiquer avec l'interface (826) de la deuxième application ;
- la première application (104 ; 800) comprenant en outre une première interface d'utilisateur graphique (106 ; 810) affichable sur un écran de la première application (104 ; 800), où les sorties d'affichage de la deuxième application (112 ; 802) sont mappées aux sorties d'affichage de la première application (104 ; 800) par un moyen de mappage (832) inclus dans un contrôleur d'exécution (828) ;
le procédé comprenant :
- la réception d'une entrée de navigation sur la première application (104 ; 800), l'entrée de navigation spécifiant une navigation d'un utilisateur, à partir d'une sortie d'affichage actuelle de la première application (104 ; 800), vers une sortie d'affichage suivante de la première application (104 ; 800), où la sortie d'affichage actuelle a été mappée à partir d'une sortie d'affichage de la deuxième application (112 ; 802), à la sortie d'affichage de la première application (104 ; 800), par le moyen de mappage (832) ;
- ajout d'un script d'action à une pile ordonnée (830) de scripts d'action maintenue par le contrôleur d'exécution, où le script d'action ajouté correspond à l'entrée de navigation, où le script d'action ajouté est ajouté en dernier dans l'ordre de la pile ordonnée (830), le script d'action ajouté étant vidé par l'entrée de données ;
- envoi de la pile ordonnée (830) de scripts d'action à la deuxième interface (826) par le contrôleur d'exécution ;
- exécution de la pile ordonnée (830) de scripts d'action par la deuxième application (112 ; 802) en fonction de l'ordre donné par la pile ordonnée (830) de scripts d'action ;
- mappage d'une sortie d'affichage de la deuxième application (112 ; 802) résultant de l'exécution de la pile ordonnée (830), à la sortie d'affichage suivante de la première application (104 ; 800), par le moyen de mappage (832) ;
- réception d'une entrée de données par la première interface d'utilisateur graphique (106 ; 810), l'entrée de données étant reçue par rapport à ladite sortie d'affichage suivante ;
- alimentation dudit script d'action ajouté avec ladite entrée de données,
- envoi de la pile ordonnée (830) de scripts d'action comprenant le script d'action alimenté à la deuxième interface (826), par le contrôleur d'exécution ;
- exécution de la pile ordonnée (830) de scripts d'action comprenant le script d'action alimenté, par la deuxième application (112 ; 802), en fonction de l'ordre donné par la pile ordonnée (830) de scripts d'action ;
- mappage d'une sortie d'affichage de la deuxième application (112 ; 802) résultant de l'exécution de la pile ordonnée (830) comprenant le script d'action alimenté, à une sortie d'affichage consécutive suivante de la première application (104 ; 800), par le moyen de mappage (832) ;
- répétition des étapes précédentes, jusqu'à la réception d'une commande d'arrêt par la première interface d'utilisateur graphique (106 ; 810) de la première application (104 ; 800).

2. Procédé selon la revendication 1, dans lequel, s'il n'est pas possible d'alimenter le script d'action ajouté avec des entrées de données, les étapes précédentes de réception d'une entrée de données seront exécutées à nouveau.

3. Procédé selon la revendication 1 ou 2, dans lequel
- la sortie d'affichage de la première application (104 ; 800) comprend des éléments inclus dans une pluralité de sorties d'affichage de la deuxième application (112 ; 802) ; et
- l'exécution du script d'action ajouté comprend la navigation à partir d'une sortie d'affichage de la deuxième application (112 ; 802), à travers l'ensemble de la pluralité de sorties d'affichage de la deuxième application (112 ; 802).

4. Procédé selon l'une quelconque des revendications précédentes, le procédé comprenant en outre :
- le lancement de la deuxième application (112 ; 802) seulement au début de l'exécution de la pile ordonnée (830) de scripts d'action ; et
- la conclusion de la deuxième application (112 ; 802) à la fin de l'exécution de la pile ordonnée (830) de scripts d'action.

5. Procédé selon l'une quelconque des revendications précédentes, dans lequel
- le fonction d'entrée par lots de la deuxième application (112 ; 802) est adaptée pour traiter des lots de commandes, sans nécessiter un accès en temps réel par un utilisateur pour chacune des commandes ; et
- le contrôleur d'exécution est capable de communiquer à la fois avec la première application (104 ; 800) et la deuxième application (112 ; 802), par le biais des première et deuxième interfaces (826).

6. Procédé selon l'une quelconque des revendications précédentes, dans lequel l'alimentation est déclenchée par la réception de l'entrée de données dans la première application (104 ; 800), ou par la réception d'une nouvelle entrée de navigation dans la première application (104 ; 800).

7. Procédé selon l'une quelconque des revendications précédentes, comprenant en outre le retrait du script d'action ajouté de la pile ordonnée (830) de scripts d'action, en cas d'exécution incomplète de la pile ordonnée (830) de scripts d'action dans la deuxième application (112 ; 802), le script d'action ajouté étant alimenté ou vidé.

8. Procédé selon la revendication 7, dans lequel l'exécution de la pile ordonnée (830) de scripts d'action est signalée par la deuxième application (112 ; 802), au moyen d'un message généré par la deuxième application (112 ; 802).

9. Procédé selon la revendication 8, dans lequel, en cas d'exécution incomplète, l'exécution de la pile ordonnée (830) sera arrêtée dans la deuxième application (112 ; 802), le message signalé nécessitant une entrée de réponse pour pouvoir poursuivre l'exécution.

10. Procédé selon la revendication 8 ou 9, dans lequel le message signalé est un message d'erreur ou un message d'information.

11. Procédé selon l'une quelconque des revendications précédentes, dans lequel la sortie d'affichage de la deuxième application (112 ; 802) comprend le contenu d'un deuxième conteneur de données, où le contenu du deuxième conteneur de données est seulement partiellement disponible sur la sortie d'affichage de la deuxième application (112 ; 802), le procédé comprenant en outre :
- l'introduction d'un certain nombre prédéterminé de commandes de navigation dans le script d'action ajouté, par le contrôleur, les commandes de navigation étant adaptées pour extraire un contenu du deuxième conteneur de données actuellement non-accessible à ladite sortie d'affichage de la deuxième application (112 ; 802) ;
- évaluation du renvoi d'un nouveau contenu du deuxième conteneur de données par chacune des commandes de navigation parmi le nombre prédéterminé ;
- si chacune des commandes de navigation parmi le nombre prédéterminé a renvoyé un nouveau contenu du deuxième conteneur de données, l'introduction de commandes de navigation supplémentaires dans le script d'action ajouté, par le contrôleur, nouvelle exécution de l'ensemble de la pile ordonnée (830) de scripts d'action dans la deuxième application (112 ; 802), et répétition des étapes précédentes, jusqu'à ce que le contenu renvoyé du deuxième conteneur de données corresponde au contenu du conteneur de données renvoyé précédemment par l'une quelconque des commandes de navigation ;
- détermination d'un nombre minimum de commandes de navigation requis, jusqu'à ce que le contenu renvoyé du deuxième conteneur de données corresponde au contenu du conteneur de données renvoyé précédemment par l'une quelconque des commandes de navigation ; et
- le stockage, par le contrôleur, dudit nombre minimum de commandes de navigation.

12. Procédé selon l'une quelconque des revendications précédentes, dans lequel l'entrée de navigation comprend l'accès à une partie particulière d'un premier conteneur de données comprise sur la sortie d'affichage de la première application (104 ; 800), le premier conteneur de données comprenant des éléments du deuxième conteneur de données.

13. Procédé selon la revendication 12, comprenant en outre l'introduction d'une commande de positionnement dans le script d'action ajouté, par le contrôleur, la commande de positionnement étant adaptée pour traiter directement une partie du deuxième conteneur de données.

14. Procédé selon la revendication 12, comprenant en outre l'introduction d'une commande de positionnement dans le script d'action ajouté, par le contrôleur, la commande de positionnement étant adaptée pour positionner tout en haut une partie du deuxième conteneur de données, relative à la partie particulière du premier conteneur de données sur la sortie d'affichage de la deuxième application (112 ; 802).

15. Procédé selon l'une quelconque des revendications précédentes, dans lequel la commande d'arrêt reçue dans la première application (104 ; 800) comprend une commande d'interruption ou une commande d'application ou une commande de sortie.

16. Procédé selon la revendication 15, dans lequel la commande d'interruption comprend le stockage de la pile ordonnée (830) de scripts d'action dans une mémoire.

17. Procédé selon la revendication 15, dans lequel la commande d'application comprend le stockage des informations relatives à l'exécution de la pile ordonnée (830) de scripts d'action dans une base de données (834).

18. Procédé selon la revendication 15, dans lequel la commande de sortie comprend la conclusion de la première application (104 ; 800).

19. Procédé selon l'une quelconque des revendications précédentes, comprenant en outre la réception d'une commande d'annulation par la première application (104 ; 800), dans lequel, lors de la réception de ladite commande d'annulation, le script d'action ajouté dans la pile ordonnée (830) de scripts d'action est retiré de la pile ordonnée (830) de scripts d'action, ou dans lequel, lors de la réception de la commande d'annulation, le premier script d'action ajouté alimenté est vidé.

20. Procédé selon l'une quelconque des revendications précédentes, comprenant en outre le maintien d'une multitude de piles ordonnées (830) de scripts d'action, associées à une multitude de premières applications (104 ; 800), dans lequel la multitude de piles ordonnées (830) de scripts d'action sont fournies à la deuxième application (112 ; 802) et exécutées par la deuxième application (112 ; 802) de manière consécutive.

21. Produit de programme informatique comprenant des instructions exécutables par ordinateur, pour exécuter l'une quelconque des étapes de procédé précédentes.
